# EUROPÄISCHE PATENTSCHRIFT

(11) **EP 2 928 787 B1**
(45) Veröffentlichungstag und Bekanntmachung des Hinweises auf die Patenterteilung: **24.10.2018**
(21) Anmeldenummer: 13799612.0
(22) Anmeldetag: 06.12.2013
(51) Int. Cl.: B65D 65/42, C09D 129/04

(54) **VERFAHREN ZUM HERSTELLEN EINES BESCHICHTETEN VERPACKUNGSMATERIALS UND VERPACKUNGSMATERIAL MIT WENIGSTENS EINER SPERRSCHICHT FÜR HYDROPHOBE VERBINDUNGEN**
METHOD FOR PRODUCING A COATED PACKAGING MATERIAL AND PACKAGING MATERIAL WITH AT LEAST ONE BARRIER LAYER FOR HYDROPHOBIC COMPOSITIONS
PROCÉDÉ DE FABRICATION D'UN MATÉRIAU D'EMBALLAGE REVÊTU ET MATÉRIAU D'EMBALLAGE DOTÉ D'AU MOINS UNE COUCHE D'ARRÊT POUR COMPOSITIONS HYDROPHOBES

(30) Priorität: 06.12.2012 EP 12195926
(43) Veröffentlichungstag der Anmeldung: 14.10.2015
(60) Teilanmeldung: 18194618.7
(73) Patentinhaber: Mayr-Melnhof Karton AG, 1041 Wien (AT)
(72) Erfinder: ZISCHKA, Michael, A-8046 Stattegg-Mühl (AT); SPANRING, Julia, A-8020 Graz (AT); REISCHL, Martin, A-8113 Stallhofen (AT)
(74) Vertreter: Hofstetter, Schurack & Partner
(86) Internationale Anmeldenummer: PCT/EP2013/075821
(87) Internationale Veröffentlichungsnummer: WO 2014/086983

(56) Entgegenhaltungen:
- EP-A1- 2 532 706
- WO-A1-96/27624
- US-A- 3 277 041
- US-A1- 2007 036 999

## Beschreibung

Die Erfindung betrifft ein Verfahren zum Herstellen eines beschichteten Verpackungsmaterials sowie ein Verpackungsmaterial mit wenigstens einer Sperrschicht für hydrophobe Verbindungen.

Aus dem Stand der Technik sind verschiedene Verpackungsmaterialien mit Sperrschichten gegen hydrophobe Verbindungen bekannt. Beispielsweise offenbart die DE 695 32 378 T2 ein Cellulosefasergewebe, welches als Sperrschicht eine Schicht aufweist, die eine kontinuierliche Anordnung von zufällig ausgerichteten Cellulosefasern sowie eine Cyclodextrin umfassende Schicht besitzt, wobei die Cyclodextrin umfassende Schicht ihrerseits als Sperrschicht oder Fangstelle zur Verhinderung der Passage von permeierenden hydrophoben Verbindungen - wie beispielsweise von Mineralölen, aromatischen Kohlenwasserstoffen, Druckfarben und dergleichen - fungiert.

Als nachteilig an dem bekannten Verpackungsmaterial ist der Umstand anzusehen, dass dieses vergleichsweise teuer und aufwendig in der Herstellung ist.

Aus der EP 2 532 706 A1 ist ein Verfahren zum Herstellen eines beschichteten Verpackungsmaterials bekannt, bei welchem ein Substrat mit einer wässrigen Zusammensetzung beschichtet wird, um eine Sperrschicht gegen hydrophobe Verbindungen auszubilden. Die wässrige Zusammensetzung umfasst Polyvinylalkohol und ein Vernetzungsmittel und weist einen Gesamtfesttstoffgehalt von höchsten 25 Gew.-% auf.

Die US 2007/0036999 A1 offenbart einen polymeren Film aus einem quervernetzem Ethylen-Vinylalkohol-Copolymer (EVOH) Copolymer, der als Wasserdampf- und Sauerstoff-Barriere dient. Der polymere Film wird auf einem ebenfalls polymeren Substrat erzeugt.

Aufgabe der Erfindung ist es, ein einfacher und kostengünstiger durchführbares Verfahren zur Herstellung eines Verpackungsmaterials auf Zellstoff-Basis mit einer Sperrschicht für hydrophobe Verbindungen bereitzustellen. Eine weitere Aufgabe der Erfindung ist es, ein einfacher und kostengünstiger herstellbares Verpackungsmaterial auf Zellstoff-Basis mit einer Sperrschicht für hydrophobe Verbindungen bereitzustellen.

Die Aufgaben werden erfindungsgemäß durch ein Verfahren gemäß Anspruch 1 zum Herstellen eines beschichteten Verpackungsmaterials sowie durch ein Verpackungsmaterial gemäß Anspruch 15 gelöst. Vorteilhafte Ausgestaltungen mit zweckmäßigen Weiterbildungen der Erfindung sind in den jeweiligen Unteransprüchen angegeben, wobei vorteilhafte Ausgestaltungen des Verfahrens als vorteilhafte Ausgestaltungen des Verpackungsmaterials und umgekehrt anzusehen sind.

Ein erfindungsgemäßes Verfahren zum Herstellen eines beschichteten Verpackungsmaterials umfasst zumindest die Schritte a) Bereitstellen eines Substrats, welches ein Basismaterial aus Zellstoff, eine einem Verpackungsgut abzuwendende Außenseite sowie eine dem Verpackungsgut zuzuwendende Innenseite aufweist, wobei das Basismaterial gestrichenes oder ungestrichenes Papier, gestrichener oder ungestrichener Karton oder gestrichene oder ungestrichene Pappe ist, b) Beschichten zumindest der Innenseite des Substrats mit wenigstens einer Schicht aus einer wässrigen Zusammensetzung, welche zumindest Polyvinylalkohol und/oder zumindest ein Polyvinylalkohol-Copolymer sowie ein Vernetzungsmittel umfasst, wobei die wässrige Zusammensetzung höchstens 40 Gew.-% Polyvinylalkohol (PVOH) und/oder Polyvinylalkohol-Copolymer und einen Gesamtfeststoffgehalt von mindestens 26 Gew.-% und höchstens 55 Gew.-% aufweist, und c) Trocknen der Schicht und Vernetzen des Polyvinylalkohols und/oder des Polyvinylalkohol-Copolymers mithilfe des Vernetzungsmittels unter Ausbildung einer Sperrschicht für hydrophobe Verbindungen. Das Substrat wird vor Schritt a) und/oder nach Schritt c) mit wenigstens einer weiteren wässrigen Zusammensetzung beschichtet, wobei die weitere wässrige Zusammensetzung zumindest Polyvinylalkohol und/oder ein Polyvinylalkohol-Copolymer umfasst und frei von Vernetzungsmitteln ist, und/oder wobei mindestens zwei Sperrschichten hergestellt werden, wobei die mindestens zwei Sperrschichten Polyvinylalkohole und/oder Polyvinylalkohol-Copolymere mit unterschiedlichen Vernetzungsgraden und/oder Polyvinylalkohole und/oder Polyvinylalkohol-Copolymere mit unterschiedlichen Hydrolysegraden und/oder mit unterschiedlichen Vernetzungsmitteln vernetzte Polyvinylalkohole und/oder Polyvinylalkohol-Copolymere umfassen. Im Rahmen der vorliegenden Erfindung sind prozentuale Angaben grundsätzlich als Gewichtsprozente zu verstehen, sofern nichts Gegenteiliges angegeben ist. Das Basismaterial kann grundsätzlich unbeschichtet oder bereits mit einer oder mehreren Schichten versehen sein, wobei zumindest auf der Innenseite unbeschichtetes bzw. lediglich mit einem Strich und/oder einer Leimung versehenes Basismaterial vorgesehen ist. Weiterhin kann das Substrat bzw. das Basismaterial grundsätzlich einlagig, zweilagig, dreilagig, vierlagig und so weiter ausgebildet sein. Das Substrat kann beispielsweise ein sogenanntes Tissue-Papier, das heißt ein saugfähiges, feingekrepptes Papier aus Zellstoff sein, das meist mehrlagig aus mehreren Schichten des cellulose-haltigen Basismaterials ausgebildet ist und als Toilettenpapier, Küchenwischtuch, Papierserviette, Papiertaschentuch und dergleichen verwendet werden kann. Ebenso kann vorgesehen sein, dass das Basismaterial bzw. das Substrat als sogenannter Liner, Sackpapier oder dergleichen ausgebildet ist. Ebenso kann das Basismaterial aus einem cellulosehaltigen Rohstoff wie etwa einem Halbzellstoff, einem Holzstoff oder dergleichen bestehen bzw. einen solchen Rohstoff anteilig umfassen. Die Ausgestaltung der Außenseite des Basismaterials ist für die vorliegende Erfindung unerheblich, so dass die Außenseite unabhängig von der Innenseite des Basismaterials ausgebildet und beispielsweise unbehandelt bzw. ungestrichen sein oder gestrichen, geglättet, beschichtet, bedruckt, geprägt, satiniert oder anderweitig behandelt werden kann. Unter Polyvinylalkohol wird im Rahmen der Erfindung ein thermoplastischer Kunststoff verstanden, welcher zumindest überwiegend aus Kopf-Kopf- und/oder Kopf-Schwanz-verknüpften Monomeren der allgemeinen Formel 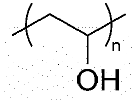 besteht. Unter Polyvinylalkohol-Copolymeren sind im Rahmen der vorliegenden Erfindung Copolymere zu verstehen, die zumindest zu 20 Mol-% aus Monomeren der allgemeinen Formel 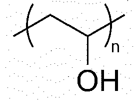 bestehen und abgesehen von etwaig vorhandenen nicht-hydrolisierten Vinylacetat-Monomeren wenigstens einen weiteren Monomertyp, beispielsweise ein Acrylat oder Methacrylat umfassen. Vorzugsweise sind die verwendeten Polyvinylalkohol-Copolymere zumindest vergleichbar wasserlöslich wie Polyvinylalkohol. Im Rahmen der Erfindung verwendbare Polyvinylalkohole sind beispielsweise durch die an sich bekannte Hydrolyse von Polyvinylestern, insbesondere von Polyvinylacetat, zugänglich. Gängige Handelsnamen von zur Durchführung der Erfindung geeigneten Polyvinylalkoholen und Polyvinylalkohol-Copolymeren für thermoplastische Anwendungen sind beispielsweise Elvanol, Gohsenol, Polyviol, Poval, Mowiol, Selvol, Exceval oder Mowiflex. Weiterhin können in der wässrigen Zusammensetzung auch unterschiedliche Polyvinylalkohole und/oder Polyvinylalkohol-Copolymere verwendet werden, solange die Summe aller Polyvinylalkohole und Polyvinylalkohol-Copolymere den maximalen Anteil von 40 Gew.-% nicht überschreitet. Grundsätzlich gelten im Rahmen der vorliegenden Erfindung alle Angaben zu Polyvinylalkohol(en) entsprechend auch für Polyvinylalkohol-Copolymere, sofern nichts Gegenteiliges angegeben ist. Unter dem Gesamtfeststoffgehalt wird im Rahmen der vorliegenden Erfindung der Gehalt der wässrigen Zusammensetzung an Feststoffen verstanden, wobei Polyvinylalkohole und/oder Polyvinylalkohol-Copolymere ebenfalls zum Gesamtfeststoffgehalt beitragen. Der Gesamtfeststoffgehalt gibt mit anderen Worten den Gewichtsanteil nach Entfernen des Wassers aus der wässrigen Zusammensetzung an. Zur Bestimmung des Gesamtfeststoffgehalts kann die wässrige Zusammensetzung beispielsweise durch Verdunsten oder durch Erhitzen bei Normaldruck oder im Vakuum bis zur Trockene abgedampft werden. Unter einem Vernetzungsmittel werden im Rahmen der Erfindung Verbindungen verstanden, welche durch Reaktion mit Polyvinylalkohol bzw. Polyvinylalkohol-Copolymeren zur Ausbildung eines dreidimensionalen Netzwerks beitragen. Grundsätzlich kann als Vernetzungsmittel eine einzelne chemische Verbindung oder ein Gemisch unterschiedlicher chemischer Verbindungen verwendet werden. Geeignete Vernetzungsmittel umfassen insbesondere bi-, tri- oder multifunktionelle Verbindungen, die mit den Hydroxy-Gruppen des Polyvinylalkohols reagieren können. Die wässrige Zusammensetzung, welche auch als Strich oder Streichfarbe bezeichnet werden kann, kann grundsätzlich frei von Füllstoffen und/oder Pigmenten ausgebildet sein oder alternativ Füllstoffe und/oder Pigmente umfassen. Es ist jedoch zu betonen, dass der Gesamtfeststoffgehalt der wässrigen Zusammensetzung inklusive etwaig vorhandener Füllstoffe/Pigmente immer höchstens 55 Gew.-% liegt, da die wässrige Zusammensetzung hierdurch als niedrig viskose Streichfarbe verwendet werden kann, die besonders hohe Auftragsgeschwindigkeiten bei gleichzeitig geringen Herstellungskosten ermöglicht. Beispielsweise kann die wässrige Zusammensetzung einen Gesamtfeststoffgehalt von 26 Gew.-%, 27 Gew.-%, 28 Gew.-%, 29 Gew.-%, 30 Gew.-%, 31 Gew.-%, 32 Gew.-%, 33 Gew.-%, 34 Gew.-%, 35 Gew.-%, 36 Gew.-%, 37 Gew.-%, 38 Gew.-%, 39 Gew.-%, 40 Gew.-%, 41 Gew.-%, 42 Gew.-%, 43 Gew.-%, 44 Gew.-%, 45 Gew.-%, 46 Gew.-%, 47 Gew.-%, 48 Gew.-%, 49 Gew.-%, 50 Gew.-%, 51 Gew.-%, 52 Gew.-%, 53 Gew.-%, 54 Gew.-% oder 55 Gew.-% aufweisen, wobei der Gesamtgehalt an Polyvinylalkohol und Polyvinylalkohol-Copolymeren höchstens 40 Gew.-% beträgt. Mit anderen Worten ist der Gesamtfeststoffgehalt der wässrigen Zusammensetzung in Abhängigkeit des jeweils verwendeten Vernetzungsmittels auf etwa 40 Gew.-% begrenzt, wenn die wässrige Zusammensetzung neben dem Vernetzungsmittel ausschließlich Polyvinylalkohol bzw. ein oder mehrere Polyvinylalkohol-Copolymere umfasst. Hierdurch kann die als Sperrschicht gegen hydrophobe Verbindungen fungierende Schicht besonders schnell und flexibel hergestellt werden, da wichtige Parameter wie Viskosität der wässrigen Zusammensetzung, Nass- und Trockenschichtdicke der Schicht, Trocknungszeit, Vernetzungsgrad und Vernetzungsgeschwindigkeit optimal an den jeweiligen Einsatzzweck angepasst werden können. Grundsätzlich führen höhere Gesamtfeststoffgehalte zu entsprechend geringeren Wasseranteilen und damit zu kürzeren Trockenzeiten, sodass vorteilhafterweise Beschichtungsanlagen mit entsprechend kürzeren Trocknungsstrecken verwendet werden können. Umgekehrt steigt mit höheren Gesamtfeststoffgehalten die Viskosität der wässrigen Zusammensetzung, sodass Zusammensetzungen mit mehr als 55 Gew.-% Gesamtfeststoffgehalt nicht mehr sinnvoll auf das Substrat bzw. das Zellstoff-Basismaterial aufgebracht werden können. Zum Auftragen der wässrigen Zusammensetzung können beispielsweise an sich bekannte Konturstreichverfahren verwendet werden, wobei die Erfindung hinsichtlich der in Schritt b) zu verwendenden Auftragsmethoden grundsätzlich nicht beschränkt ist. Das erfindungsgemäße Verfahren kann darüber hinaus besonders einfach und kostengünstig durchgeführt werden, da lediglich kostengünstige Ausgangsmaterialien benötigt und mit Hilfe von gängigen Auftragswerkzeugen schnell und einfach verarbeitet werden können. Die derart hergestellte Sperrschicht des Verpackungsmaterials ist als Öl- und Fettbarriere nutzbar. Durch die Vernetzung des Polyvinylalkohols/Polyvinylalkohol-Copolymers wird auch eine teilweise Hydrophobierung erhalten, die sich über die COBB Werte ausdrückt.

Durch die Vernetzung des Polyvinylalkohols/Polyvinylalkohol-Copolymers wird auf der Innenseite des Verpackungsmaterials eine Sperrschicht erzeugt, welche gegenüber hydrophoben Verbindungen als Sperre und/oder Fangstelle fungiert und eine Migration dieser hydrophoben Verbindungen von der Außenseite des Verpackungsmaterials und/oder aus dem Basismaterial in den Innenraum der Verpackung vollständig oder zumindest annähernd vollständig unterbindet. Die Sperrschicht ist aufgrund der Quervernetzung des Polyvinylalkohols feuchtigkeitsbeständig, wodurch die Sperrwirkung vorteilhaft über die gesamte Lebensdauer einer aus dem erfindungsgemäßen Verpackungsmaterial gefertigten Verpackung aufrechterhalten werden kann. Darüber hinaus ist das erfindungsgemäß hergestellte Verpackungsmaterial sowohl aerob als auch anaerob abbaubar, da sowohl das Cellulose-Basismaterial als auch die Beschichtung eine hydrophile Oberfläche besitzen, die damit der bakteriellen Zersetzung zugänglich sind. Indem die Sperrschicht auf der Innenseite des Verpackungsmaterials ausgebildet wird, ist die Sperrschicht zudem besonders zuverlässig vor mechanischer Beschädigung beim Transport oder während der Lagerung einer aus dem erfindungsgemäßen Verpackungsmaterial gebildeten Verpackung geschützt. Das über das erfindungsgemäße Verfahren hergestellte Verpackungsmaterial garantiert aufgrund seiner Barrierewirkung gegenüber hydrophoben Verbindungen - wie etwa Mineralölbestandteilen aus Recyclingmaterial oder Mineralölbestandteilen aus Aufdrucken - zudem beispielsweise die Lebensmittelsicherheit des Verpackungsguts. Gleichzeitig erhält es die ökologischen Vorteile einer altpapierbasierten Verpackungswirtschaft und gewährleistet die Recyclierbarkeit des beschichteten Substrats.

Weitere Vorteile ergeben sich, wenn das Substrat vor Schritt a) und/oder nach Schritt c) mit einer weiteren wässrigen Zusammensetzung beschichtet wird, wobei die weitere wässrige Zusammensetzung zumindest Polyvinylalkohol und/oder ein Polyvinylalkohol-Copolymer umfasst und frei von Vernetzungsmitteln ist. Auf diese Weise kann eine Basis- und/oder Deckschicht aus unvernetztem Polyvinylalkohol/Polyvinylalkohol-Copolymer hergestellt werden, wodurch das auf dem Basismaterial des Substrats ausgebildete Schichtsystem eine verbesserte Flexibilität und Dehnbarkeit besitzt.

In einer vorteilhaften Ausgestaltung der Erfindung ist vorgesehen, dass eine wässrige Zusammensetzung verwendet wird, die einen Gehalt an Polyvinylalkohol und/oder Polyvinylalkohol-Copolymer zwischen 26 Gew.-% und 35 Gew.-%, insbesondere zwischen 26 Gew.-% und 32 Gew.-% und vorzugsweise zwischen 26 Gew.-% und 30 Gew.-% aufweist. Auf diese Weise kann das Substrat besonders schnell, kostengünstig und zuverlässig mit einer Sperrschicht versehen werden, die besonders gute Barriereeigenschaften gegenüber hydrophoben Verbindungen aufweist. Alternativ oder zusätzlich wird eine wässrige Zusammensetzung verwendet, die einen Gesamtfeststoffgehalt zwischen 26 Gew.-% und 52 Gew.-%, insbesondere zwischen 26 Gew.-% und 50 Gew.-% und vorzugsweise zwischen 26 Gew.-% und 45 Gew.-%, und/oder einen Wassergehalt von mindestens 45 Gew.-%, insbesondere von mindestens 55 Gew.-% und vorzugsweise mit einem Wassergehalt zwischen 65 Gew.-% und 70 Gew.-% aufweist. Auch hierdurch kann das Substrat besonders schnell, kostengünstig und zuverlässig mit einer hochwertigen Sperrschicht versehen werden. Unter einem Wassergehalt von mindestens 45 Gew.-% sind dabei insbesondere Wassergehalte von 45 Gew.-%, 46 Gew.-%, 47 Gew.-%, 48 Gew.-%, 49 Gew.-%, 50 Gew.-%, 51 Gew.-%, 52 Gew.-%, 53 Gew.-%, 54 Gew.-%, 55 Gew.-%, 56 Gew.-%, 57 Gew.-%, 58 Gew.-%, 59 Gew.-%, 60 Gew.-%, 61 Gew.-%, 62 Gew.-%, 63 Gew.-%, 64 Gew.-%, 65 Gew.-%, 66 Gew.-%, 67 Gew.-%, 68 Gew.-%, 69 Gew.-%, 70 Gew.-%, 71 Gew.-%, 72 Gew.-%, 73 Gew.-% oder 74 Gew.-% zu verstehen, wobei sich Wassergehalte zwischen 65 Gew.-% und 70 Gew.-% für die meisten Anwendungen als besonders vorteilhaft gezeigt haben.

In einer weiteren vorteilhaften Ausgestaltung der Erfindung ist vorgesehen, dass ein Polyvinylalkohol und/oder ein Polyvinylalkohol-Copolymer mit einem Hydrolysegrad zwischen 75 % und 100 %, insbesondere zwischen 80 % und 99,9 % verwendet wird bzw. werden. Unter einem Hydrolysegrad zwischen 75 % und 100 % werden im Rahmen der Erfindung Hydrolysegrade von 75 %, 76 %, 77 %, 78 %, 79 %, 80 %, 81 %, 82 %, 83 %, 84 %, 85 %, 86 %, 87 %, 88 %, 89 %, 90 %, 91 %, 92 %, 93 %, 94 %, 95 %, 96 %, 97 %, 98 %, 99 % oder 100 % sowie entsprechende Zwischenwerte wie beispielsweise 99,0 %, 99,1 %, 99,2 %, 99,3 %, 99,4 %, 99,5 %, 99,6 %, 99,7 %, 99,8 %, 99,9 % oder 100,0 %verstanden. Alternativ oder zusätzlich kann vorgesehen sein, dass ein Polyvinylalkohol und/oder ein Polyvinylalkohol-Copolymer mit einem Polymerisationsgrad zwischen 100 und 3000, insbesondere zwischen 120 und 1200 und vorzugsweise zwischen 150 und 650, und/oder mit einem mittleren Molekulargewicht zwischen 11000 g/mol und 60000 g/mol, insbesondere zwischen 13000 g/mol und 23000 g/mol und/oder zwischen 31000 g/mol und 50000 g/mol verwendet wird bzw. werden. Unter einem Polymerisationsgrad wird die Anzahl der Monomereinheiten in einem Polymermolekül verstanden. Unter einem Polymerisationsgrad zwischen 100 und 3000 sind beispielsweise Polymerisationsgrade von 100, 150, 200, 250, 300, 350, 400, 450, 500, 550, 600, 650, 700, 750, 800, 850, 900, 950, 1000, 1050, 1100, 1150, 1200, 1250, 1300, 1350, 1400, 1450, 1500, 1550, 1600, 1650, 1700, 1750, 1800, 1850, 1900, 1950, 2000, 2050, 2100, 2150, 2200, 2250, 2300, 2350, 2400, 2450, 2500, 2550, 2600, 2650, 2700, 2750, 2800, 2850, 2900, 2950 oder 3000 sowie entsprechende Zwischenwerte wie beispielsweise 150, 160, 170, 180, 190, 200, 210, 220, 230, 240, 250, 260, 270, 280, 290, 300, 310, 320, 330, 340, 350, 360, 370, 380, 390, 400, 410, 420, 430, 440, 450, 460, 470, 480, 490, 500, 510, 520, 530, 540, 550, 560, 570, 580, 590, 600, 610, 620, 630, 640 oder 650 bzw. 150, 151, 152, 153, 154, 155, 156, 157, 158, 159, 160 usw. zu verstehen. Bei dem Polymerisationsgrad handelt es sich im Allgemeinen um einen Mittelwert. Unter einem mittleren Molekulargewicht zwischen 11000 g/mol und 60000 g/mol sind beispielsweise Molekulargewichte von 11000 g/mol, 12000 g/mol, 13000 g/mol, 14000 g/mol, 15000 g/mol, 16000 g/mol, 17000 g/mol, 18000 g/mol, 19000 g/mol, 20000 g/mol, 21000 g/mol, 22000 g/mol, 23000 g/mol, 24000 g/mol, 25000 g/mol, 26000 g/mol, 27000 g/mol, 28000 g/mol, 29000 g/mol, 30000 g/mol, 31000 g/mol, 32000 g/mol, 33000 g/mol, 34000 g/mol, 35000 g/mol, 36000 g/mol, 37000 g/mol, 38000 g/mol, 39000 g/mol, 40000 g/mol, 41000 g/mol, 42000 g/mol, 43000 g/mol, 44000 g/mol, 45000 g/mol, 46000 g/mol, 47000 g/mol, 48000 g/mol, 49000 g/mol, 50000 g/mol, 51000 g/mol, 52000 g/mol, 53000 g/mol, 54000 g/mol, 55000 g/mol, 56000 g/mol, 57000 g/mol, 58000 g/mol, 59000 g/mol, 60000 g/mol sowie entsprechende Zwischenwerte, beispielsweise 13000 g/mol, 13250 g/mol, 13500 g/mol, 13750 g/mol, 14000 g/mol, 14250 g/mol, 14500 g/mol, 14750 g/mol, 15000 g/mol, 15250 g/mol, 15500 g/mol, 15750 g/mol, 16000 g/mol, 16250 g/mol, 16500 g/mol, 16750 g/mol, 17000 g/mol, 17250 g/mol, 17500 g/mol, 17750 g/mol, 18000 g/mol, 18250 g/mol, 18500 g/mol, 18750 g/mol, 19000 g/mol, 19250 g/mol, 19500 g/mol, 19750 g/mol, 20000 g/mol, 20250 g/mol, 20500 g/mol, 20750 g/mol, 21000 g/mol, 21250 g/mol, 21500 g/mol, 21750 g/mol, 22000 g/mol, 22250 g/mol, 22500 g/mol, 22750 g/mol, 23000 g/mol oder 31000 g/mol, 31250 g/mol, 31500 g/mol, 31750 g/mol, 32000 g/mol, 32250 g/mol, 32500 g/mol, 32750 g/mol, 33000 g/mol, 33250 g/mol, 33500 g/mol, 33750 g/mol, 34000 g/mol, 34250 g/mol, 34500 g/mol, 34750 g/mol, 35000 g/mol, 35250 g/mol, 35500 g/mol, 35750 g/mol, 36000 g/mol, 36250 g/mol, 36500 g/mol, 36750 g/mol, 37000 g/mol, 37250 g/mol, 37500 g/mol, 37750 g/mol, 38000 g/mol, 38250 g/mol, 38500 g/mol, 38750 g/mol, 39000 g/mol, 39250 g/mol, 39500 g/mol, 39750 g/mol, 40000 g/mol, 40250 g/mol, 40500 g/mol, 40750 g/mol, 41000 g/mol, 41250 g/mol, 41500 g/mol, 41750 g/mol, 42000 g/mol, 42250 g/mol, 42500 g/mol, 42750 g/mol, 43000 g/mol, 43250 g/mol, 43500 g/mol, 43750 g/mol, 44000 g/mol, 44250 g/mol, 44500 g/mol, 44750 g/mol, 45000 g/mol, 45250 g/mol, 45500 g/mol, 45750 g/mol, 46000 g/mol, 46250 g/mol, 46500 g/mol, 46750 g/mol, 47000 g/mol, 47250 g/mol, 47500 g/mol, 47750 g/mol, 48000 g/mol, 48250 g/mol, 48500 g/mol, 48750 g/mol, 49000 g/mol, 49250 g/mol, 49500 g/mol, 49750 g/mol, 50000 g/mol etc. zu verstehen. Durch die Auswahl eines Polyvinylalkohols und/oder Polyvinylalkohol-Copolymers mit dem genannten Polymerisationsgrad und/oder Molekulargewicht kann vorteilhaft eine Erhöhung des Gesamtfeststoffgehalts der wässrigen Zusammensetzung ohne Anhebung der Viskosität erzielt werden. Mit anderen Worten sind auch bei Gesamtfeststoffgehalten bis 55 Gew.-% vergleichsweise niedrige Viskositäten möglich, sodass ein Aufragen der wässrigen Zusammensetzung mit unterschiedlichen gängigen Auftragswerkzeugen möglich ist. Hierdurch wird eine besonders schnelle Beschichtung und Vernetzung bei gleichzeitig kurzen Trockenzeiten und hohen Substratgeschwindigkeiten ermöglicht, wodurch hoch effektive Barriereschichten entsprechend schnell und kostengünstig hergestellt werden können. Grundsätzlich kann zur Herstellung einer Sperrschicht auch ein Gemisch von Polyvinylalkoholen/ Polyvinylalkohol-Copolymeren mit unterschiedlichen Hydrolysegraden und/oder unterschiedlichen Polymerisationsgraden und/oder unterschiedlichen Molekulargewichten verwendet werden. Hierüber können die chemischen und physikalischen Eigenschaften der Sperrschicht exakt an den jeweiligen Anwendungszweck des Verpackungsmaterials sowie an das zum Auftragen der wässrigen Zusammensetzung verwendete Auftragsverfahren angepasst werden. Durch die Variation des Hydrolysegrads und/oder des Polymerisationsgrads und/oder des Molekulargewichts können beispielsweise die Porosität, die Löslichkeit und die Kristallinität der Schicht nach dem Bedarf der Anwendung eingestellt werden. Dadurch lassen sich insbesondere die Flexibilität und die Dehnbarkeit der resultierenden Sperrschicht optimal an die jeweiligen Anforderungen anpassen.

Weitere Vorteile ergeben sich, indem eine wässrige Zusammensetzung verwendet wird, welche wenigstens ein weiteres Polymer und/oder Copolymer als Additiv umfasst. Hierdurch sind höhere Gesamtfeststoffgehalte ermöglicht, wobei das weitere Polymer und/oder Copolymer seinerseits zur Verbesserung der Barrierewirkung der Sperrschicht und/oder zur Einstellung der Viskosität der wässrigen Zusammensetzung verwendet werden kann.

Weitere Vorteile ergeben sich, wenn das wenigstens eine weitere Polymer und/oder Copolymer in der wässrigen Zusammensetzung dispergiert wird und/oder dass das wenigstens eine weitere Polymer und/oder Copolymer aus einer Gruppe ausgewählt wird, die Poly(meth)acrylate, Polymethyl(meth)acrylate, Polyamide, Biopolymere, insbesondere Chitosan, Polyurethane, Polyvinylacrylate, Polyester, insbesondere Poly(meth)acrylsäureester, Polyvinylester, Polymilchsäureester, Polyhydroxyalkanoate, Polyhydroxybutyrat und/oder Polyhydroxybuttersäure, und/oder Copolymere hiervon umfasst. Dies erlaubt eine besonders schnelle und kostengünstige Herstellung hochwertiger Sperr- bzw. Barriereschichten. Der Ausdruck "(Meth)acrylat" bezeichnet im Rahmen der vorliegenden Erfindung grundsätzlich Acrylate und/oder Methacrylate.

In einer weiteren vorteilhaften Ausgestaltung der Erfindung ist vorgesehen, dass als Vernetzungsmittel wenigstens eine olefinisch gesättigte und/oder ungesättigte Verbindung mit zumindest einer funktionellen Gruppe ausgewählt aus Aldehyd, Carbonsäure, Säureanhydrid und Aminogruppe, und/oder Eisenchlorid und/oder ein Alkylorthosilikat, insbesondere Tetraethylorthosilikat, und/oder ein Harnstoff-Formaldehyd-Harz und/oder ein physikalischer Vernetzer, insbesondere Carboxymethylcellulose verwendet wird. Hierdurch können die chemischen und physikalischen Eigenschaften der Sperrschicht besonders exakt an den Anwendungszweck des Verpackungsmaterials sowie an das jeweilige Beschichtungs- und Trocknungsverfahren angepasst werden. Geeignete olefinisch gesättigte und/oder ungesättigte Vernetzungsmittel sind beispielsweise Glyoxal, Glutaraldehyd, Acrylaldehyd, Malonsäure, Glutarsäure, Adipinsäure, Zitronensäure, Butantetracarbonsäure, Acrylsäure, Polyacrylsäure, Methacrylsäure, Maleinsäure, Methacrylmethylester oder Hydroxyethylmethacrylat sowie beliebige Mischungen hieraus sowie Polymerisate und/oder Copolymerisate davon. Beispielsweise kann als Vernetzer Polyacrylsäure und/oder Polymethacrylsäure (im Folgenden unter dem Begriff "Poly(meth)acrylsäure" zusammengefasst) verwendet werden, deren Säuregruppen mit den Alkohol-Gruppen des Polyvinylalkohols veresterbar sind. Grundsätzlich können natürlich auch andere Polyalkylacrylsäuren wie beispielsweise Polyethylacrylsäure verwendet werden.

Alternativ oder zusätzlich kann als Vernetzungsmittel Eisenchlorid (FeCl₃), Tetraethylorthosilikat und/oder ein Harnstoff-Formaldehyd-Harz und/oder ein physikalischer Vernetzer verwendet werden. Die Verwendung von Eisenchlorid bietet insbesondere bei der Herstellung von Verpackungsmaterial für Lebensmittel Vorteile, da die wässrige Zusammensetzung frei von im Lebensmittelbereich unerwünschten Verbindungen wie beispielsweise Chromaten oder dergleichen ausgebildet sein kann. Vorzugsweise ist das Harnstoff-Formaldehyd-Harz wasserbasiert, um eine gute Mischbarkeit in der wässrigen Zusammensetzung zu gewährleisten. Derartige, an sich bekannte Harnstoff-Formaldehyd-Harze sind beispielsweise unter dem Handelsnamen Urecoll erhältlich. Die physikalische Vernetzung des Polyvinylalkohols bzw. des Polyvinylalkohol-Copolymers resultiert aus einer mehr oder weniger beständigen Zusammenlagerung von funktionellen Gruppen oder Kettenabschnitten mit dem physikalischen Vernetzer ohne Ausbildung chemischer Bindungen. Da die physikalische Vernetzung im Gegensatz zu einer Vernetzung über kovalente Bindungen thermoreversibel ist, können die harten Domänen durch Erhitzen auf Temperaturen, die höher sind als deren Glastemperaturen bzw. Schmelztemperaturen, wieder aufgebrochen werden. Daher lässt sich die resultierende Sperrschicht vorteilhafterweise thermoplastisch verarbeiten.

Weitere Vorteile ergeben sich, indem eine wässrige Zusammensetzung verwendet wird, welche bezogen auf 100 Gewichtsanteile Polyvinylalkohol zwischen 0,01 und 55 Gewichtsanteile Vernetzungsmittel und/oder welche bezogen auf 100 Gewichtsanteile Polyvinylalkohol zwischen 1 und 60 Gewichtsanteile eines Füllstoffs und/oder eines Pigments umfasst. Unter einem Gewichtsanteil zwischen 0,01 und 60 sind insbesondere Gewichtsanteile von 0,01, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59 oder 60 sowie entsprechende Zwischenwerte zu verstehen. Indem der Gewichtsanteil des Vernetzungsmittels im genannten Bereich zwischen 0,01 und 55 Gewichtsanteilen liegt, kann der Vernetzungsgrad des Polyvinylalkohols und damit die Elastizität und die Sperreigenschaft der Sperrschicht optimal an den jeweiligen Anwendungszweck angepasst werden. Als Füllstoffe und/oder Pigmente eignen sich grundsätzlich organische, anorganische sowie organisch-anorganisch modifizierte Partikel, die mit oder ohne Quellvermögen in Wasser ausgestattet sind. Die Verwendung eines Füllstoffs und/oder Pigments erlauben unter anderem eine Anpassung des optischen Eindrucks des Verpackungsmaterials sowie eine bessere Bedruckbarkeit. Darüber hinaus bilden geeignete Füllstoffe und/oder Pigmente eine zusätzliche "mechanische" Barriere gegen den Durchtritt von hydrophoben Verbindungen. Die Sperrwirkung der Sperrschicht kann somit durch den Zusatz von Füllstoffen und/oder Pigmenten vorteilhaft gesteigert werden. Als anorganische Füllstoffe eignen sich im besonderen Kaolin, Schichtsilikate wie Montmorillonit, Bentonit, Vermiculit, Laponit, Hectorit, Saponit sowie Silika und Alumosilikate. Als organische Füllstoffe können Zellulosen - beispielsweise in Form von Fasern oder als mikro- und nanofibrillierte Zellulose - sowie andere Polysaccharide - beispielsweise Chitosan, Zellulosederivate, Hemizellulosen oder modifizierte/unmodifizierte Stärke - eingesetzt werden. Eine physikalische Vernetzung basierend auf Wasserstoffbrückenbindungen mit dem Polyvinylalkohol wird auch durch den Einsatz von Füllstoffen und Pigmenten erreicht, welche an der Oberfläche im wässrigen Milieu OH-Gruppen besitzen und/oder ausbilden können.

Weitere Vorteile ergeben sich, wenn ein Füllstoff und/oder ein Pigment verwendet wird, welches säurestabil ist und/oder zumindest im Wesentlichen sphärische und/oder plättchenförmige Partikelgeometrien aufweist. Säurestabile Füllstoffe und/oder Pigmente sind dabei insbesondere von Vorteil, wenn der Polyvinylalkohol im sauren Milieu vernetzt wird. Insbesondere ist es in diesem Fall bevorzugt, wenn die wässrige Zusammensetzung frei von säurelabilen Verbindungen wie beispielsweise Stärke oder dergleichen ist. Durch sphärische und/oder plättchenförmige Partikelgeometrien kann eine besonders hohe Sperrwirkung erzielt werden, da der zurückzulegende Weg der hydrophoben Verbindungen durch die labyrinthartige Anordnung der Füllstoffe und/oder Pigmente in der Sperrschicht erheblich verlängert wird. Um den Gesamtfeststoffgehalt zu erhöhen und gleichzeitig die Viskosität der wässrigen Zusammensetzung in einem gut verarbeitbaren Bereich zu belassen, kann weiterhin eine Zugabe von kolloidalen Dispersionen erfolgen, die den Feststoffgehalt erhöhen und die Barrierewirkung gegenüber hydrophoben Substanzen nicht beeinträchtigen bzw. sogar verbessern. Als kolloidale Dispersionen können beispielsweise alle Arten von Acrylatdispersionen angesehen werden, deren Teilchen kolloidal dispergiert sind. Weitere Additive, die sich insbesondere bei der Trocknung der Sperrschicht(en) vorteilig auswirken, sind mikrokristalline Cellulosen. Durch Zugabe von geringen Anteilen, beispielsweise < 2 Gew.-% dieser Cellulose-Typen wird das Wasserretentionsverhalten und somit die Schichtausbildung beim Trockenprozess verbessert.

In einer weiteren vorteilhaften Ausgestaltung der Erfindung ist vorgesehen, dass ein pH-Wert der wässrigen Zusammensetzung vor dem Aufbringen auf das Substrat auf einen Wert zwischen 1 und 7, insbesondere zwischen 1,5 und 3,5, eingestellt wird und/oder dass die wässrige Zusammensetzung vor dem Aufbringen auf das Substrat entgast wird. Indem der pH-Wert der wässrigen Zusammensetzung auf einen Wert von 1,0, 1,5, 2,0, 2,5, 3,0, 3,5, 4,0, 4,5, 5,0, 5,5, 6,0, 6,5 oder 7,0 bzw. auf einen entsprechenden Zwischenwert eingestellt wird, kann die Vernetzungsgeschwindigkeit des Polyvinylalkohols bzw. des Polyvinylalkohol-Copolymers gezielt variiert werden. Hierdurch kann das Verfahren optimal an die Eigenschaften des verwendeten Basismaterials, an die jeweils verwendete Auftragsmethode der wässrigen Zusammensetzung sowie an das verwendete Trocknungsverfahren angepasst werden. Durch das Entgasen der wässrigen Zusammensetzung wird eine etwaige Bläschenbildung in der Sperrschicht zuverlässig verhindert und eine gleich bleibend hohe Sperrwirkung über die beschichtete Substrat-Oberfläche erzielt.

In einer weiteren vorteilhaften Ausgestaltung der Erfindung wird eine wässrige Zusammensetzung verwendet, die eine Viskosität zwischen 150 mPas und 2500 mPas, insbesondere zwischen 200 mPas und 1700 mPas aufweist. Unter einer Viskosität zwischen 150 mPas und 2500 mPas sind insbesondere Viskositäten von 150 mPas, 200 mPas, 250 mPas, 300 mPas, 350 mPas, 400 mPas, 450 mPas, 500 mPas, 550 mPas, 600 mPas, 650 mPas, 700 mPas, 750 mPas, 800 mPas, 850 mPas, 900 mPas, 950 mPas, 1000 mPas, 1050 mPas, 1100 mPas, 1150 mPas, 1200 mPas, 1250 mPas, 1300 mPas, 1350 mPas, 1400 mPas, 1450 mPas, 1500 mPas, 1550 mPas, 1600 mPas, 1650 mPas, 1700 mPas, 1750 mPas, 1800 mPas, 1850 mPas, 1900 mPas, 1950 mPas, 2000 mPas, 2050 mPas, 2100 mPas, 2150 mPas, 2200 mPas, 2250 mPas, 2300 mPas, 2350 mPas, 2400 mPas, 2450 mPas oder 2500 mPas sowie entsprechende Zwischenwerte wie beispielsweise 200 mPas, 201 mPas, 202 mPas, 203 mPas, 204 mPas, 205 mPas, 206 mPas, 207 mPas, 208 mPas, 209 mPas, 210 mPas usw. zu verstehen. Hierdurch kann die wässrige Zusammensetzung optimal an die jeweils verwendete Auftragsmethode angepasst werden, sodass in jedem Fall eine durchgängige und gleichmäßige Schichtdicke erzielt werden kann. Eine niedrige Viskosität, insbesondere im Bereich zwischen etwa 150 mPas bis etwa 1000 mPas ist dabei insbesondere für berührungslose Auftragsverfahren wie beispielsweise Vorhangbeschichtungsverfahren, Gießen oder Sprühen geeignet. Eine höhere Viskosität, insbesondere bis etwa 1700 mPas, erlaubt demgegenüber einen verbesserten Auftrag mittels Rakel (ggf. gerillt), Klinge, Filmpresse und dergleichen, beispielsweise zur Herstellung einer gleichzeitig als Konditionierungsstrich dienenden Sperrschicht. Bei der Verwendung von Vorhangbeschichtungsverfahren ist es bevorzugt, wenn keine mehrschichtigen Beschichtungsvorhänge verwendet werden. Hierdurch ist es möglich, überschüssige wässrige Zusammensetzung einfach aufzufangen und für einen erneuten Beschichtungsdurchgang zu verwenden, ohne dass es zu einer unerwünschten Durchmischung von wässrigen Zusammensetzungen unterschiedlicher Zusammensetzung kommen kann. Ebenso kann die wässrige Zusammensetzung mithilfe mehrschichtiger Schlitzdüsen auf das Substrat aufgebracht werden. Die Viskosität der wässrigen Zusammensetzung kann beispielsweise unter SATP-Bedingungen, das heißt bei T = 298,15 K entsprechend 25 °C und p = 101.300 Pa (1,013 bar) ermittelt werden.

Weitere Vorteile ergeben sich, wenn die wässrige Zusammensetzung derart auf das Substrat aufgebracht wird, dass sich eine flächenbezogenen Trockenmasse zwischen 1 g/m² und 20 g/m², insbesondere zwischen 3 g/m² und 15 g/m², ergibt. Unter einer flächenbezogenen Trockenmasse zwischen 1 g/m² und 20 g/m² sind im Rahmen der Erfindung insbesondere flächenbezogenen Trockenmassen von 1 g/m², 2 g/m², 3 g/m², 4 g/m², 5 g/m², 6 g/m², 7 g/m², 8 g/m², 9 g/m², 10 g/m², 11 g/m², 12 g/m², 13 g/m², 14 g/m², 15 g/m², 16 g/m², 17 g/m², 18 g/m², 19 g/m² oder 20 g/m² sowie entsprechende Zwischenwerte zu verstehen. Hierdurch kann die Sperrwirkung der Sperrschicht an unterschiedlich mit hydrophoben Verbindungen belastete Basismaterialien oder Verpackungssituationen angepasst werden. Für gering belastete Basismaterialien oder für Verpackungsmaterial, das voraussichtlich geringen Mengen hydrophober Verbindungen ausgesetzt sein wird, genügen entsprechend geringere Auftragsmengen. Umgekehrt können größere Auftragsmengen verwendet werden, um die Sperrwirkung der Sperrschicht entsprechend zu vergrößern. Daneben kann die Auftragsmenge in Abhängigkeit der verwendeten Auftragsmethode variiert werden, um eine gleichmäßige Sperrschicht mit einer ausreichend hohen Sperrwirkung zu erzeugen. Wegen der Quervernetzung des Polyvinylalkohols genügen dabei im Unterschied zum Stand der Technik grundsätzlich deutlich geringere Auftragsmengen, um eine ausreichende Sperrwirkung zu erzielen. Hierdurch ergeben sich insbesondere bei einem Massenartikel wie Verpackungsmaterial erhebliche Kosteneinsparungen. Darüber hinaus ist es im Unterschied zum Stand der Technik grundsätzlich nicht erforderlich, komplexe mehrschichtige Schichtsysteme auf der Oberfläche des Substrats auszubilden, um eine ausreichende Sperrwirkung sicherzustellen.

Alternativ oder zusätzlich kann vorgesehen sein, dass die wässrige Zusammensetzung derart auf das Substrat aufgebracht wird, dass die Schicht eine Nassfilmdicke zwischen 1 µm und 1000 µm, insbesondere zwischen 10 µm und 200 µm, aufweist. Hierdurch kann die wässrige Zusammensetzung insbesondere in Abhängigkeit der Wasseraufnahmefähigkeit des jeweiligen Substrats gleichmäßig aufgebracht und entsprechend gleichmäßig getrocknet werden. Darüber hinaus werden unnötige Verluste an wässriger Zusammensetzung während des Beschichtens vermieden, sodass die Sperrschicht auf diese Weise besonders wirtschaftlich und mit einer gleich bleibend hohen Güte hergestellt werden kann. Unter einer Nassfilmdicke zwischen 1 µm und 1000 µm sind beispielsweise Nassfilmdicken von 10, 20, 30, 40, 50, 60, 70, 80, 90, 100, 110, 120, 130, 140, 150, 160, 170, 180, 190, 200, 210, 220, 230, 240, 250, 260, 270, 280, 290, 300, 310, 320, 330, 340, 350, 360, 370, 380, 390, 400, 410, 420, 430, 440, 450, 460, 470, 480, 490, 500, 510, 520, 530, 540, 550, 560, 570, 580, 590, 600, 610, 620, 630, 640, 650, 660, 670, 680, 690, 700, 710, 720, 730, 740, 750, 760, 770, 780, 790, 800, 810, 820, 830, 840, 850, 860, 870, 880, 890, 900, 910, 920, 930, 940, 950, 960, 970, 980, 990 oder 1000 µm sowie entsprechende Zwischenwerte wie beispielsweise 10, 11, 12, 13, 14, 15, 16, 17, 18, 19, 20 µm usw. zu verstehen. Weiterhin kann über die Nassfilmdicke die Dicke der trockenen Sperrschicht gezielt eingestellt werden. Beispielsweise konnte mithilfe einer Sperr- oder Barriereschicht von 20 µm eine Verbesserung der Barrierewirkung über einem Beobachtungszeitraum von 730 Tagen (2 Jahren) bei 20 °C von 0.23 auf 0.094 mg/kg (d.h. unter den Grenzwert von 0.15 mg/kg) verbessert werden. Die Kontaktfläche betrug 16.5 dm² mit einem Füllgut von 375 g. Das Karton-Substrat wies eine Ausgangskonzentration von 150 mg/kg Mineralöl auf.

In einer weiteren vorteilhaften Ausgestaltung der Erfindung ist vorgesehen, dass die wässrige Zusammensetzung mittels eines egalisierenden Streichverfahrens, insbesondere mittels Rakel, Klinge und/oder Filmpresse, und/oder mittels eines Konturstreichverfahrens, insbesondere mittels Gießen, Sprühen, Vorhangbeschichten und/oder Luftbürste, auf das Substrat aufgebracht wird. Die Verwendung eines egalisierenden Streichverfahrens erlaubt eine Materialglättung und ist insoweit besonders zweckmäßig, als dass gegebenenfalls anschließende kontaktlose Auftragsverfahren die Kontur der Oberfläche des Substrats weitgehend erhalten. Dies bedeutet, dass eine raue Oberflächenkontur des Basismaterials bzw. des Substrats mithilfe eines egalisierenden Streichverfahrens ausgeglichen und damit geglättet wird. Es wird in der Regel eine umso höhere Produktqualität erreicht, je glatter die Materialbahn ist. In diesem Zusammenhang hat sich herausgestellt, dass es für die meisten Anwendungen vorteilhafter ist, das Substrat erst zu glätten und dann die Sperrschicht anzubringen als eine raue Kontur der Sperrschicht nachträglich glätten. Durch die Verwendung von egalisierenden oder nivellierenden Streichverfahren kann zusammenfassend auf rauen Substraten eine glatte Oberfläche erzeugt werden. Diese glatte Oberfläche eignet sich dann besonders für eine nachfolgende Anwendung von Konturstreichverfahren.

Die Verwendung von Konturstreichverfahren bietet den grundsätzlichen Vorteil, dass an der Kontaktstelle zwischen Basismaterial und wässriger Zusammensetzung kein Druck ausgeübt wird, sodass ein tiefes Eindringen der wässrigen Zusammensetzung in das Basismaterial vermieden wird. Hierdurch können besonders gleichmäßige Sperrschichten hergestellt werden. Gleichzeitig werden besonders geringe Auftragsmengen an wässriger Zusammensetzung benötigt, um eine gewünschte Sperrschichtwirkung zu erzielen, wodurch das Verfahren besonders wirtschaftlich durchgeführt werden kann.

In einer weiteren vorteilhaften Ausgestaltung der Erfindung ist vorgesehen, dass die wässrige Zusammensetzung mit einer Temperatur zwischen 30 °C und 85 °C, insbesondere zwischen 35 °C und 80 °C auf das Substrat aufgebracht wird.

Beispielsweise kann die wässrige Zusammensetzung eine Temperatur von 30°C, 31 °C, 32°C, 33°C, 34°C, 35°C, 36°C, 37°C, 38°C, 39°C, 40°C, 41 °C, 42°C, 43°C, 44°C, 45°C, 46°C, 47°C, 48°C, 49°C, 50°C, 51 °C, 52°C, 53°C, 54°C, 55°C, 56°C, 57°C, 58°C, 59°C, 60°C, 61 °C, 62°C, 63°C, 64°C, 65°C, 66°C, 67°C, 68°C, 69°C, 70°C, 71 °C, 72°C, 73°C, 74°C, 75°C, 76°C, 77°C, 78°C, 79°C, 80°C, 81 °C, 82°C, 83°C, 84°C oder 85°C besitzen. Je höher die Temperatur der Zusammensetzung gewählt wird, umso schneller kann die aufgebrachte Schicht getrocknet werden. Dies ermöglicht die Verwendung von gängigen Auftragsapparaturen mit kurzen Trocknungsstrecken, wodurch entsprechende Zeit-, Energie- und Kosteneinsparungen realisierbar sind. Darüber hinaus kann über die Temperatur gezielt Einfluss auf die Viskosität der wässrigen Zusammensetzung sowie auf die Vernetzungsgeschwindigkeit genommen werden.

Weitere Vorteile ergeben sich, indem das beschichtete Substrat in Schritt c) mittels Infrarotbestrahlung und/oder mittels Konvektion und/oder unter UV-Bestrahlung getrocknet wird und/oder dass das beschichtete Substrat (12) bis zu einer Restfeuchte zwischen 3 Gew.-% und 12 Gew.-%, insbesondere zwischen 6 Gew.-% und 10 Gew.-% getrocknet wird. Hierdurch können die Trocknung der aufgebrachten Schicht und das Vernetzen des Polyvinylalkohols/Polyvinylalkohol-Copolymers in Abhängigkeit des verwendeten Vernetzungsmittels optimal gesteuert werden. Darüber hinaus kann auch der gewünschte Restfeuchtigkeitsgehalt präzise eingestellt werden. Die Bestrahlung mit UV-Licht kann dabei alternativ oder zusätzlich zu einer Infrarotbestrahlung und/oder Konvektion durchgeführt werden und ist insbesondere bei der Verwendung von Eisenchlorid (FeCl₃) als Vernetzungsmittel von Vorteil, um die Quervernetzungsreaktion zu initiieren. Weitere Vorteile ergeben sich, wenn das beschichtete Substrat in Schritt c) auf eine Restfeuchte zwischen 3 % und 12 %, insbesondere zwischen 6 % und 10 %, im Basismaterial getrocknet wird. Durch eine Restfeuchte im Bereich von 3 %, 4 %, 5 %, 6 %, 7 %, 8 %, 9 %, 10 %, 11 % oder 12 % wird sichergestellt, dass das Verpackungsmaterial optimale mechanische Eigenschaften besitzt und sich beschädigungsfrei weiter zu einer Verpackung verarbeiten lässt. Die genannten Restfeuchten sind insbesondere bei der Verwendung von Basismaterialien, die zumindest teilweise aus Recyclingfasern bestehen, von Vorteil, um ein unerwünschtes Brechen oder Verkürzen der Zellstofffasern beim Falten, Zuschneiden oder sonstigen Weiterverarbeiten des Verpackungsmaterials zu vermeiden.

In weiterer Ausgestaltung der Erfindung wird in Schritt a) ein Substrat bereitgestellt, welches ein Basismaterial umfasst, dessen Außenseite mit einer Konditionierungsschicht und/oder einer Deckschicht versehen ist. Mit anderen Worten ist es vorgesehen, dass das in Schritt b) mit der wässrigen Zusammensetzung zu beschichtende Basismaterial bereits mit einer Schicht versehen ist. Die Konditionierungsschicht und/oder die Deckschicht kann beispielsweise eine Polyvinylalkohol/Polyvinylalkohol-Copolymer umfassende Schicht sein, welche vorzugsweise mit sphärischen oder plättchenförmigen Pigmenten gefüllt ist, sein. Vorteilhaft hierbei ist, dass bereits der Konditionierungsstrich Barriereeigenschaften gegenüber hydrophoben Substanzen aufweist. Weiterhin kann vorgesehen sein, dass das bereitgestellte Substrat geleimt ist bzw. wird. Dies ist insbesondere bei stark saugfähigen Substraten von Vorteil, um die Saugwirkung zu verringern und somit die Beschichtungsgüte zu verbessern und den Materialeinsatz an wässriger Zusammensetzung zu verringern. Weiterhin kann vorgesehen sein, dass das bereitgestellte Substrat mit einer Deck- und/oder Konditionierungsschicht aus einem anderen Polymer, beispielsweise einem Poly(meth)acrylat versehen ist bzw. wird. Die Deckschicht kann grundsätzlich mit Pigmenten und/oder Füllstoffen und/oder Vernetzern ausgestattet sein. Die Elastizität bei der Verarbeitung des Verpackungsmaterials wird dadurch nicht beeinträchtigt.

Weitere Vorteile ergeben sich, wenn die Konditionierungsschicht und/oder die Deckschicht unvernetzten Polyvinylalkohol umfasst und/oder aus unvernetztem Polyvinylalkohol besteht. Insbesondere kann vorgesehen sein, dass die Konditionierungsschicht und/oder die Deckschicht frei von quervernetztem Polyvinylalkohol ausgebildet ist, wobei hierdurch nicht ausgeschlossen ist, dass die Konditionierungsschicht und/oder die Deckschicht neben unvernetztem Polyvinylalkohol gegebenenfalls weitere Komponenten wie beispielsweise Füllstoffe und/oder Pigmente umfasst. Hierdurch kann die Elastizität und Biegsamkeit des Verpackungsmaterials vorteilhaft gesteigert werden. Darüber hinaus wird auf diese Weise sichergestellt, dass die Sperrschicht, welche im weiteren Verfahrensverlauf auf der Konditionierungsschicht und/oder Deckschicht erzeugt wird, bei der weiteren Verarbeitung des Verpackungsmaterials - beispielsweise beim Stanzen, Schneiden oder Kleben - nicht verletzt und ihre Sperrwirkung aufrechterhalten wird. Indem die Konditionierungsschicht und/oder die Deckschicht unvernetzten Polyvinylalkohol umfasst bzw. vollständig aus unvernetztem Polyvinylalkohol besteht oder frei von quervernetztem Polyvinylalkohol ist, wird die Sperrwirkung der Sperrschicht gegenüber hydrophoben Verbindungen außerdem zusätzlich verbessert, ohne dass Einschränkungen im Hinblick auf die biologische Abbaubarkeit des Verpackungsmaterials in Kauf genommen werden müssen.

In einer weiteren Ausgestaltung der Erfindung ist vorgesehen, dass die Schritte b) und c) mindestens einmal und/oder höchstens dreimal wiederholt werden. Hierdurch kann auf der Innenseite des Basismaterials ein Schichtsystem aus zwei, drei oder vier Sperrschichten gebildet werden, wodurch eine besonders hohe Sperrwirkung erzielt wird. Dies ist beispielsweise bei Verpackungen von Vorteil, die über den Seeweg transportiert werden bzw. die über längere Zeit unterschiedlichen klimatischen Bedingungen ausgesetzt sind. Ein weiterer Vorteil eines mehrfachen Auftrags der wässrigen Zusammensetzung bzw. der Ausbildung von zwei oder mehr Sperrschichten auf die Innenseite besteht darin, dass etwaige Überlappungen von Bläschen in den einzelnen Sperrschichten besonders zuverlässig ausgeschlossen werden. Die Sperrschichten können dabei grundsätzlich gleich oder unterschiedlich ausgebildet sein. Wenn die Schritte b) und c) mehrfach nacheinander durchgeführt werden, kann überschüssige wässrige Zusammensetzung einfach aufgefangen und für einen erneuten Verfahrensdurchgang wieder verwendet werden, wodurch die Verfahrenskosten erheblich gesenkt werden.

Dabei hat es sich in weiterer Ausgestaltung als vorteilhaft gezeigt, wenn die weitere Zusammensetzung einen Gehalt an Polyvinylalkohol/Polyvinylalkohol-Copolymer von höchsten 40 Gew.-% aufweist, wenn sie frei von Zusätzen wie Füllstoffen und/oder Pigmenten ausgebildet ist, oder wenn die weitere Zusammensetzung einen Gesamtfeststoffgehalt von höchstens 55 Gew.-% aufweist, wenn sie mit Füllstoffen und/oder Pigmenten versehen ist. Hierdurch kann die Viskosität der weiteren wässrigen Zusammensetzung optimal auf das jeweils verwendete Auftragsverfahren abgestimmt werden. Zusätzlich wird dadurch die Lagerstabilität der wässrigen Zusammensetzung verbessert. Weitere Vorteile ergeben sich aus den vorhergehenden Beschreibungen.

Ein weiterer Aspekt der Erfindung betrifft ein Verpackungsmaterial, umfassend ein Substrat, welches ein Basismaterial aus Zellstoff (Cellulose), eine einem Verpackungsgut abzuwendende Außenseite sowie eine dem Verpackungsgut zuzuwendende Innenseite aufweist, sowie ein auf der Innenseite des Substrats angeordnetes Schichtsystem mit wenigstens einer Sperrschicht für hydrophobe Verbindungen, wobei wenigstens eine Sperrschicht quervernetzten Polyvinylalkohol und/oder ein quervernetztes Polyvinylalkohol-Copolymer umfasst. Das Basismaterial ist gestrichenes oder ungestrichenes Papier, gestrichener oder ungestrichener Karton oder gestrichene oder ungestrichene Pappe. Zusätzlich umfasst das Schichtsystem wenigstens eine Schicht, welche unvernetzten Polyvinylalkohol und/oder ein unvernetztes Polyvinylalkohol-Copolymer enthält, und/oder mindestens zwei Sperrschichten aus quervernetztem Polyvinylalkohol und/oder quervernetztem Polyvinylalkohol-Copolymer, wobei die Sperrschichten Polyvinylalkohole und/oder Polyvinylalkohol-Copolymere mit unterschiedlichen Vernetzungsgraden und/oder Polyvinylalkohole und/oder Polyvinylalkohol-Copolymere mit unterschiedlichen Hydrolysegraden und/oder mit unterschiedlichen Vernetzungsmitteln vernetzte Polyvinylalkohole und/oder Polyvinylalkohol-Copolymere umfassen. Das erfindungsgemäße Verpackungsmaterial besitzt eine hervorragende Sperrwirkung gegenüber hydrophoben Verbindungen bei gleichzeitig hoher Feuchtigkeitsbeständigkeit und kann im Unterschied zum Stand der Technik besonders einfach und kostengünstig hergestellt werden, da lediglich kostengünstige Ausgangsmaterialien benötigt und mit Hilfe von gängigen Fabrikationsanlagen schnell und einfach verarbeitet werden können. Das erfindungsgemäße Verpackungsmaterial garantiert zudem aufgrund seiner Barrierewirkung gegenüber hydrophoben Verbindungen - wie etwa Mineralölbestandteilen aus Recyclingmaterial oder aus Aufdrucken - die Lebensmittelsicherheit des Verpackungsguts. Gleichzeitig erhält es die ökologischen Vorteile einer altpapierbasierten Verpackungswirtschaft. Die weiteren sich ergebenden Vorteile sind den vorhergehenden Beschreibungen zu entnehmen, wobei vorteilhafte Ausgestaltungen des Verfahrens als vorteilhafte Ausgestaltungen des Verpackungsmaterials und umgekehrt anzusehen sind.

Das Verpackungsmaterial ist zudem durch ein Verfahren gemäß dem ersten Erfindungsaspekt erhalten. Eine besonders spezifische Sperrwirkung gegenüber unterschiedlichen hydrophoben Verbindungen wird erreicht, indem die mindestens zwei Sperrschichten Polyvinylalkohole/Polyvinylalkohol-Copolymere mit unterschiedlichen Vernetzungsgraden und/oder Polyvinylalkohole/Polyvinylalkohol-Copolymere mit unterschiedlichen Hydrolysegraden und/oder mit unterschiedlichen Vernetzungsmitteln vernetzte Polyvinylalkohole/Polyvinylalkohol-Copolymer umfassen. Weiterhin hat es sich als vorteilhaft gezeigt, wenn das Schichtsystem wenigstens eine Schicht umfasst, welche unvernetzten Polyvinylalkohol und/oder ein unvernetztes Polyvinylalkohol-Copolymer enthält. Vorzugsweise ist diese Schicht frei von quervernetztem Polyvinylalkohol/Polyvinylalkohol-Copolymer bzw. ohne Zusatz von Vernetzungsmitteln ausgebildet. Hierdurch wird die Flexibilität und Dehnbarkeit des Schichtsystems vorteilhaft gesteigert, sodass eine etwaige Verletzung der Sperrschicht bei der weiteren Verarbeitung des erfindungsgemäßen Verpackungsmaterials besonders zuverlässig verhindert wird.

Weitere Vorteile ergeben sich, wenn die Sperrschicht zumindest überwiegend aus quervernetztem Polyvinylalkohol besteht. Mit anderen Worten ist vorgesehen, dass die Sperrschicht zu 51 %, 52 %, 53 %, 54 %, 55 %, 56 %, 57 %, 58 %, 59 %, 60 %, 61 %, 62 %, 63 %, 64 %, 65 %, 66 %, 67 %, 68 %, 69 %, 70 %, 71 %, 72 %, 73 %, 74 %, 75 %, 76 %, 77 %, 78 %, 79 %, 80 %, 81 %, 82 %, 83 %, 84 %, 85 %, 86 %, 87 %, 88 %, 89 %, 90 %, 91 %, 92 %, 93 %, 94 %, 95 %, 96 %, 97 %, 98 %, 99 % oder 100 % aus quervernetztem Polyvinylalkohol und/oder Polyvinylalkohol-Copolymer gebildet ist. Hierdurch können insbesondere die Flexibilität, die Dehnbarkeit, die Sperrwirkung und die Bedruckbarkeit der Sperrschicht besonders einfach an den jeweiligen Anwendungszweck angepasst werden.

In einer weiteren vorteilhaften Ausgestaltung der Erfindung ist vorgesehen, dass die Polyvinylalkohol und/oder ein Polyvinylalkohol-Copolymer umfassende Sperrschicht organische, anorganische und/oder organisch-anorganisch modifizierte Partikel umfasst, welche eine sphärische oder plättchenförmige Teilchengeometrie aufweisen. Die Verwendung derartiger Partikel erlaubt unter anderem eine Anpassung des optischen Eindrucks des Verpackungsmaterials sowie eine bessere Bedruckbarkeit. Darüber hinaus bilden geeignete Partikel eine zusätzliche "mechanische" Barriere gegen den Durchtritt von hydrophoben Verbindungen. Die Sperrwirkung der Sperrschicht kann somit durch den Zusatz dieser Partikel, die als Füllstoff und/oder Pigmente fungieren können, vorteilhaft gesteigert werden. Insbesondere als vorteilhaft haben sich hierbei Kaolin, Schichtsilikate wie Montmorillonit, Bentonit, Vermiculit, Hectorit, Saponit, Laponit sowie Silika und Alumosilikate bzw. Mischungen davon erwiesen.

In einer weiteren vorteilhaften Ausgestaltung der Erfindung ist vorgesehen, dass die unvernetzten Polyvinylalkohol und/oder unvernetztes Polyvinylalkohol-Copolymer enthaltende Schicht unmittelbar auf der Innenseite des Substrats und/oder zwischen zwei Sperrschichten und/oder auf einer dem Basismaterial abgewandten Seite der Sperrschicht angeordnet ist. Mit anderen Worten ist vorgesehen, dass die unvernetzten Polyvinylalkohol bzw. unvernetztes Polyvinylalkohol-Copolymer enthaltende Schicht bezüglich des Basismaterials die Grund- und/oder die abschließende Deckschicht bildet und/oder zwischen zwei quervernetzten Polyvinylalkohol/Polyvinylalkohol-Copolymer enthaltenden Sperrschichten ausgebildet ist. Dies erlaubt eine besonders gute Anpassung an unterschiedliche Verwendungszwecke des Verpackungsmaterials und erhöht neben der Flexibilität und Dehnbarkeit des Schichtsystems auch die Sperrwirkung gegenüber hydrophoben Verbindungen.

Weitere Merkmale der Erfindung ergeben sich aus den Ansprüchen, den Ausführungsbeispielen sowie anhand der Zeichnung. Die vorstehend in der Beschreibung genannten Merkmale und Merkmalskombinationen sowie die nachfolgend in den Ausführungsbeispielen genannten Merkmale und Merkmalskombinationen sind nicht nur in der jeweils angegebenen Kombination, sondern auch in anderen Kombinationen verwendbar, ohne den Rahmen der Erfindung zu verlassen. Dabei zeigt:
- Fig. 1: eine schematische seitliche Schnittansicht eines erfindungsgemäßen Verpackungsmaterials gemäß einem ersten Ausführungsbeispiel; und
- Fig. 2: eine schematische seitliche Schnittansicht eines erfindungsgemäßen Verpackungsmaterials gemäß einem zweiten Ausführungsbeispiel.

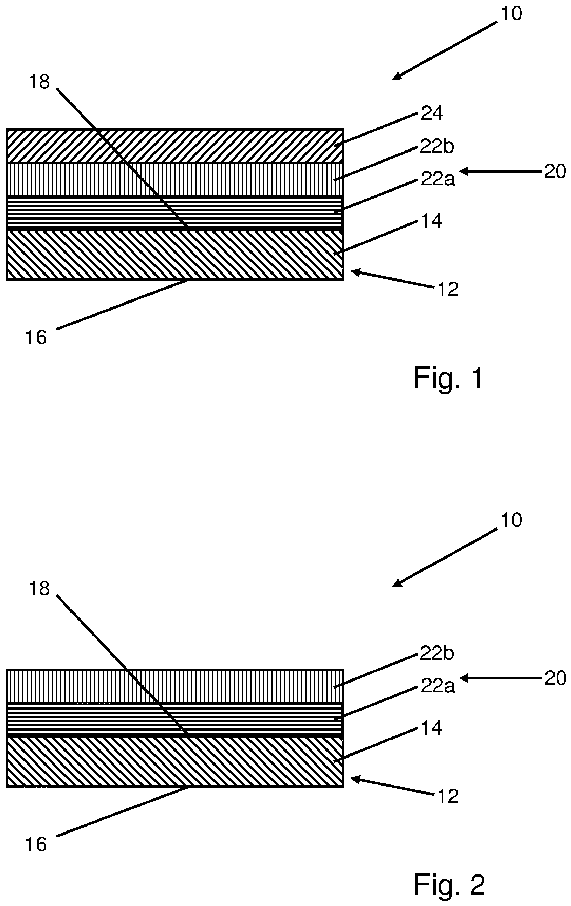

Fig. 1 zeigt eine schematische seitliche Schnittansicht eines erfindungsgemäßen Verpackungsmaterials 10 gemäß einem ersten Ausführungsbeispiel. Das Verpackungsmaterial 10 umfasst ein Substrat 12, welches aus einem Basismaterial 14 besteht und eine einem Verpackungsgut abzuwendende Außenseite 16 sowie eine dem Verpackungsgut zuzuwendende Innenseite 18 aufweist. Bei dem Basismaterial 14 handelt es sich im vorliegenden Ausführungsbeispiel um einen Karton mit einer flächenbezogenen Masse von 400 g/m². Auf der Innenseite 18 des Substrats 12 ist ein Schichtsystem 20 ausgebildet, welches durch Erzeugen einer ersten Sperrschicht 22a, einer zweiten Sperrschicht 22b sowie einer als Deckschicht fungierenden Schicht 24 hergestellt ist. Die Sperrschichten 22a, 22b umfassen quervernetzten Polyvinylalkohol. Die Sperrschicht 22a umfasst darüber hinaus plättchenförmige bzw. sphärische Partikel bzw. Mischungen davon als Füllstoff und/oder Pigment. Die Sperrschichten 22a, 22b verunmöglichen oder verhindern damit zumindest weitgehend die Migration hydrophober Verbindungen durch das Schichtsystem 20 hindurch. Die im Folgenden näher beschriebene Quervernetzung des Polyvinylalkohols sorgt dabei für eine erhöhte mechanische Stabilität und verhindert ein Aufquellen der Sperrschichten 22a, 22b, wenn diese mit Feuchtigkeit in Berührung kommen.

Als Füllstoffe und/oder Pigmente eignen sich grundsätzlich organische, anorganische sowie organisch-anorganisch modifizierte Partikel, die mit oder ohne Quellvermögen in Wasser ausgestattet sind. Im vorliegenden Ausführungsbeispiel umfasst die Sperrschicht 22a Kaolin. Kaolin bietet dabei den Vorteil, dass es säurestabil ist und in Wasser nicht quillt. Darüber hinaus besteht das verwendete Kaolin aus plättchenförmigen Partikeln, welche eine mechanische Barriere bilden und hierdurch die Migration von Verbindungen durch die Sperrschicht 22a zusätzlich erschweren bzw. verunmöglichen. Die zweite Sperrschicht 22b besteht demgegenüber ausschließlich aus quervernetztem Polyvinylalkohol, wobei zur Herstellung der beiden Sperrschichten 22a, 22b Polyvinylalkohole mit unterschiedlichen Hydrolyse- und Polymerisationsgraden verwendet und mit unterschiedlichen Vernetzungsmitteln quervernetzt wurden. Grundsätzlich können die beiden Sperrschichten 22a, 22b aber natürlich auch den gleichen quervernetzten Polyvinylalkohol umfassen. Die abschließende Schicht 24, welche in einer späteren, aus dem Verpackungsmaterial 10 gebildeten Verpackung in Kontakt mit dem Verpackungsgut steht, besteht demgegenüber aus unvernetztem Polyvinylalkohol und erhöht insbesondere die Flexibilität und Dehnbarkeit des Schichtsystems 20. Alternativ oder zusätzlich kann vorgesehen sein, dass die Schicht 24 unmittelbar auf dem Substrat 12 und/oder zwischen den Sperrschichten 22a, 22b ausgebildet wird.

Die Außenseite 16 des Substrats 12 ist im gezeigten Ausführungsbeispiel nicht beschichtet. Grundsätzlich können aber auch auf der Außenseite 16 eine oder mehrere Schichten vorgesehen sein, um bestimmte Eigenschaften des Verpackungsmaterials 10, beispielsweise eine bessere Bedruckbarkeit oder eine Gas- und/oder Feuchtigkeitsbarrierewirkung, zu erzielen. Ebenso kann die Außenseite 16 bedruckt, geprägt, satiniert oder anderweitig behandelt werden.

Das Substrat 12 kann grundsätzlich vor, während und/oder nach dem Aufbringen des Schichtsystems 20 vor- bzw. nachbehandelt werden. Beispielsweise kann das Substrat 12 bzw. das Verpackungsmaterial 10 kalandriert, beispielsweise geprägt, geglättet, verdichtet und/oder satiniert werden. Hierzu können beispielsweise konventionelle Kalander, Schuhkalander, Beltkalander (Metallband, Kunststoffband etc.), Glättpressen oder Glättzylinder verwendet werden. Allerdings können grundsätzlich auch anderweitige Behandlungsverfahren vorgesehen sein.

Fig. 2 zeigt eine schematische seitliche Schnittansicht eines erfindungsgemäßen Verpackungsmaterials 10 gemäß einem zweiten Ausführungsbeispiel. Das Basismaterial 14 ist erneut ein Karton mit einer flächenbezogenen Masse von 400 g/m². Im Unterschied zum vorhergehenden Ausführungsbeispiel umfasst das Schichtsystem 20 keine Schicht 24 ohne quervernetzten Polyvinylalkohol bzw. ohne quervernetztes Polyvinylalkohol-Copolymer. Stattdessen umfasst das Schichtsystem 20 eine erste Sperrschicht 22a, die durch Beschichten des Substrats 12 mit einer wässrigen Zusammensetzung erhalten ist, die Polyvinylalkohol bzw. ein Polyvinylalkohol-Copolymer, Pigmente, Füllstoffe, Additive sowie einen Vernetzer umfasst. Weiterhin umfasst das Schichtsystem 20 eine zweite Sperrschicht 22b, die als Deckschicht fungiert und durch Beschichten der ersten Sperrschicht 24a mit einer wässrigen Zusammensetzung erhalten ist, die ebenfalls Polyvinylalkohol bzw. ein Polyvinylalkohol-Copolymer, Pigmente, Füllstoffe, Additive sowie einen Vernetzer umfasst.

Die Sperrschichten 22a, 22b in Fig. 1 und Fig. 2 können grundsätzlich die gleichen Bestandteile enthalten. Unterschiede zwischen den Sperrschichten 22a, 22b ergeben sich durch die unterschiedliche Zugabe von Pigmenten, Füllstoffen und/oder Additiven, beispielsweise in Form von kolloidalen Polymer-Dispersionen. Die zweite Sperrschicht 22b zeigt trotz Zugabe an Pigment und Vernetzer hervorragende Flexibilität, welche sich positiv auf den weiteren Verarbeitungsprozess des Verpackungsmaterials 10 auswirkt. Als ein weiteres Additiv kann beispielsweise mikrokristalline Cellulose eingesetzt werden, die sich positiv auf das Wasserretentionsverhalten auswirkt. Aufgrund der kristallinen Struktur ist eine zusätzliche Barrierewirksamkeit bereits bei Zugabe von kleinen Mengen (z. B. ≤1 Gew.-%) gegeben. Wenn es gefordert ist, kann auch im zweiten Ausführungsbeispiel eine weitere Schicht 24 aus unvernetztem PVOH bzw. unvernetztem Polyvinylalkohol-Copolymer aufgebracht werden, um die Flexibilität und Dehnbarkeit des Verpackungsmaterials 10 bei Bedarf weiter zu verbessern.

Im Folgenden werden verschiedene weitere Ausführungsbeispiele für die Herstellung des erfindungsgemäßen Verpackungsmaterials 10 mit Barriereeigenschaften gegenüber unpolaren chemischen Verbindungen aufgeführt.

### 1. Herstellung einer wässrigen Polyvinylalkohol-Lösung

Sofern der Polyvinylalkohol oder das wasserlösliche Polyvinylalkohol-Copolymer nicht bereits in Wasser gelöst vorliegt, wird die Herstellung einer Polyvinylalkohol(-Copolymer)-Lösung wie folgt durchgeführt:
Zunächst wird eine definierte Menge kaltes Wasser vorgelegt. Anschließend wird eine definierte Menge eines gegebenenfalls fein gemahlenen Polyvinylalkohol-Pulvers (analog: Polyvinylalkohol-Copolymer-Pulver) mit einem Hydrolysegrad, der bevorzugt zwischen 80 % und 99,9 % liegt, unter starkem Rühren (2000 U/min) bei einer Temperatur von 75 °C bis 80 °C innerhalb von30 bis 45 Minuten mit einem Intensiv- oder Dissolverrührer eingerührt. Der Auflösungsprozess ist beendet, sobald die Lösung klar ist. Die noch warme Lösung wird auf 25 °C abgekühlt. Vor der weiteren Verwendung wird der genaue Feststoffgehalt der Lösung beispielsweise mittels einer Thermowaage bestimmt und gegebenenfalls auf einen Wert zwischen 5 Gew.-% und 15 Gew.-% eingestellt. Der ermittelte bzw. eingestellte Feststoffgehalt dient als Grundlage für den weiteren Verfahrensablauf und insbesondere zur Bestimmung der auf das Substrat aufzubringenden Schichtdicke sowie zur Mengenbestimmung der zuzugebenden Vernetzungsreagenzien. Der pH-Wert der erhaltenen Polyvinylalkohol-Lösung ist neutral.

Nachdem der Abkühlvorgang beendet ist, wird der pH-Wert der frisch zubereiteten Polyvinylalkohol-Lösung bei Bedarf eingestellt. Die Einstellung des pH-Werts erfolgt in an sich bekannter Weise durch Zugabe einer geeigneten Säure oder Base. Geeignet sind beispielsweise Mineralsäuren wie etwa konzentrierte Salzsäure oder Basen wie Natriumhydroxid.

Alternativ kann vorgesehen sein, dass der Polyvinylalkohol (PVOH) bzw. das Polyvinylalkohol-Copolymer bei Temperaturen zwischen 75°C und 95°C aufgelöst wird, wobei ein Gehalt der wässrigen Lösung an Polyvinylalkohol(Copolymer) auf maximal 40 Gew.-%, beispielsweise auf 30 Gew.-% eingestellt wird.

### 2. Herstellung einer wässrigen Zusammensetzung

### 2.1. Glyoxal als Vernetzungsmittel

Zu der gemäß Punkt 1. hergestellten Polyvinylalkohol-Lösung wird eine 40 %-ige Glyoxal-Lösung bei Raumtemperatur (25 °C) unter starkem Rühren innerhalb von etwa 15 Minuten bei gleichzeitiger Einstellung des pH-Werts der Lösung auf pH = 3 hinzugegeben, um eine wässrige Zusammensetzung für die Beschichtung des Substrats 12 zu erhalten. Die Menge an zugegebenem Glyoxal bewegt sich zwischen 5 und 40 Gew.-%, bezogen auf 100 Gew.-% Polyvinylalkohol.

Nach 15 Minuten wird die wässrige Zusammensetzung bei einem anfänglichen Unterdruck von -200 mbar, der in der Folge langsam auf -500 mbar bis -600 mbar gesteigert wird, entgast. Wird das Vakuum weiter erhöht (z. B. auf über -800 mbar, d. h. auf einen Druck von etwa 200 mbar), beginnt das Wasser zu sieden und Kondensat scheidet sich an den Wänden des Unterdruckbehälters ab. Zum Abschluss wird die wässrige Zusammensetzung bei einem Druck von etwa 100 mbar ohne weiteres Rühren entgast.

Nach Beendigung der Entgasung kann die wässrige Zusammensetzung auf das Substrat 12 aufgetragen werden, wobei der Polyvinylalkohol durch das Glyoxal quervernetzt wird.

### 2.2 Adipinsäure (AS), Glutarsäure (GS) und/oder Maleinsäure (MS) als Vernetzungsmittel

Die Zugabe der genannten Dicarbonsäuren kann in zwei Unterkategorien unterteilt werden:
Die AS und GS gehören der Gruppe der gesättigten Dicarbonsäuren an, wobei die AS schlecht (24 g/l) und die GS leicht (640 g/l) in kaltem Wasser (20 °C) löslich sind. Die Kondensationsreaktionen beider Säuren mit Polyvinylalkohol werden vorzugsweise durch Zugabe von Mineralsäuren (z. B. Salzsäure) katalytisch unterstützt, indem der pH-Wert der wässrigen Zusammensetzung auf pH = 3 eingestellt wird.

Die MS ist eine ungesättigte Dicarbonsäure, die sehr gut wasserlöslich (788 g/l, 20 °C) ist und in wässriger Lösung stark sauer reagiert. Die MS liegt in cis-Form vor. Durch UV-Strahlung und längeres Erhitzen bei 150 °C lagert sie sich in die transForm (Fumarsäure) um, was bei der Quervernetzungsreaktion gegebenenfalls berücksichtigt werden kann. Bei Verwendung der MS ist daher in der Regel keine zusätzliche pH-Einstellung der wässrigen Zusammensetzung notwendig. Der pH-Wert liegt je nach verwendeter Menge zwischen 1,6 und 3,2, abhängig von der in der wässrigen Polyvinylalkohol-Lösung gelösten Menge MS. Die zugegebene Gesamtmenge an Dicarbonsäure bewegt sich grundsätzlich zwischen 5 und 25 Gew.-%, bezogen auf 100 Gew.-% Polyvinylalkohol.

Die wässrige Zusammensetzung, welche Polyvinylalkohol und eine oder mehrere der genannten Dicarbonsäuren umfasst, wird anschließend auf 70 °C erhitzt, 15 Minuten bei 70 °C intensiv gerührt und dann auf 25 °C abgekühlt. Der pH-Wert kann jetzt bei Bedarf entsprechend der jeweils eingesetzten Dicarbonsäure eingestellt werden. Nach der pH-Wert-Einstellung der wässrigen Zusammensetzung erfolgt vorzugsweise der vorstehend beschriebene Entgasungsschritt.

### 2.3. Eisenchlorid (FeCl₃) als Vernetzungsmittel

Die Zugabe von FeCl₃ zur Polyvinylalkohol-Lösung erfolgt bevorzugt bei 25 °C unter starkem Rühren. FeCl₃ kann als Feststoff oder bereits gelöst in Wasser vorliegen. Die zugegebene Menge an FeCl₃ bewegt sich zwischen 1 und 15 Gew.-%, bezogen auf 100 Gew.-% Polyvinylalkohol. Die Durchmischungszeit beträgt 15 Minuten bei 25 °C. Eine pH-Wert-Einstellung ist nicht erforderlich sofern keine weiteren Vernetzungsmittel vorgesehen sind. Vor dem Auftragen auf das zu beschichtende Substrat 12 empfiehlt sich auch hier ein Entgasungsschritt.

### 2.4. Polyacrylate als Vernetzungsmittel

Unter Polyacrylaten werden im Rahmen der vorliegenden Erfindung Derivate der Polyacrylsäure mit der allgemeinen Formel 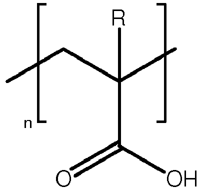 verstanden, wobei R Wasserstoff oder unsubstituierte oder substituierte Alkylgruppe, insbesondere Methyl-, Ethyl-, 1-Propyl-, 2-Propyl-, 1-Butyl-, 2-Butyl- und/oder tert-Butyl-, bedeutet. Es werden bevorzugt Polyacrylsäuren im Molekulargewichtsbereich von 2000 bis 1500000 g/mol, insbesondere von 50000 bis 500000 g/mol, verwendet, da diese Klasse vergleichsweise gut in kaltem Wasser (20 °C) löslich ist. Die zugegebene Menge an Polyacrylsäure bewegt sich zwischen 0,01 und 10 Gew-%. Die Durchmischzeit beträgt ungefähr 15 min bei 25 °C bis 60 °C. Der pH-Wert der Mischung kann bei Bedarf durch Zugabe von basischen Zusätzen wie KOH, NaOH oder dergleichen erhöht werden. Vor dem Auftrag empfiehlt sich ein Entgasungsschritt.

Alternativ zu einem Dissolverrührer kann zum Auflösen von PVOH bzw. zur Herstellung einer wässrigen Lösung mit Pigmenten/Füllstoffen/Additiven und Vernetzer ein spezieller Becherrührer (Hersteller Viscojet) mit konisch verjüngten Düsen verwendet werden, der den Eintrag von Gasbläschen in die Polymerlösung bzw. gefüllte Polymerdispersion verhindert. Mit diesem Rührorgan ist es möglich, PVOH bzw. ein Copolymer davon schonend und schnell aufzulösen und weitere Bestanteile wie Pigmente, Additive, Vernetzer etc. schonend und gleichmäßig einzubringen. Die Dispersion und Auflösung der Inhaltsstoffe erfolgt ähnlich wie mit dem Dissolverrührer. Die einzelnen Inhaltsstoffe werden zur wässrigen Vorlage zugegeben, gut benetzt und mithilfe des Becherrührers verteilt.

Als weitere Additive eignen sich kolloidale Dispersionen mit hohem Feststoffgehalt (45 - 55 %). Als kolloidale Teilchen können beispielsweise organische Polymere verwendet werden, die eine Sperrwirkung gegenüber hydrophoben Verbindungen haben bzw. die hydrophobe Sperrwirkung nicht beeinträchtigen.

### 2.5. Mischungen von Polyvinylalkohol mit den unter 2.1. bis 2.4. beschriebenen Vernetzungsmitteln

Die vorstehend genannten Vernetzungsmittel können grundsätzlich beliebig gemischt werden, z. B. FeCl₃ mit Di- und/oder Polycarbonsäuren und/oder Dialdehyden.

Als weitere Additive eignen sich kolloidale Dispersionen mit hohem Feststoffgehalt (45 - 55 %). Die kolloidalen Teilchen können organische Polymere sein, die ebenfalls eine Sperrwirkung gegenüber hydrophoben Verbindungen haben bzw. die hydrophobe Sperrwirkung nicht beeinträchtigen.

### 2.6. Einbringen von Füllstoffen und/oder Pigmenten

Füllstoffe und/oder Pigmente mit vorzugsweise sphärischen und/oder plättchenförmigen Partikeln werden in einem Gewichtsprozent-Bereich von 5-60 % bezogen auf 100 Gew.-% Polyvinylalkohol (PVOH) zu der wässrigen Zusammensetzung hinzugegeben. Als Füllstoffe und/oder Pigmente eignen sich grundsätzlich organische, anorganische und/oder organisch-anorganisch modifizierte Partikel, die mit oder ohne Quellvermögen in Wasser ausgestattet sind.

Sphärische Partikel wie Silika-Partikel mit spezifischen Oberflächen von 200-500 g/m² können eingesetzt werden. Die Silika-Partikel liegen in fester Form bzw. in wässrigen Dispersionen vor. Die Größe der Partikel bewegt sich zwischen 5-60 nm. Es können unmodifizierte wie auch (hydrophil) modifizierte Partikel eingesetzt werden. Zugegeben werden Partikel im Bereich von 10-60 % bezogen auf 100 Gew-% PVOH.

Alternativ können Mischungen von sphärischen und plättchenförmigen Partikeln zugegeben werden. Plättchenförmige Partikel wie Kaoline und Schichtsilikate (teilweise bzw. vollständig exfoliert), können unmodifiziert oder modifiziert eingesetzt werden. Schichtsilikate können mit Alkoxysilanen funktionalisiert werden, die Amino-, Epoxy- oder Mercaptogruppen tragen. Neben Kaolin können Montmorillonit, Bentonit, Vermiculit, Hectorit, Saponit, Laponit, etc. bzw. Mischungen davon eingesetzt werden. Beim Einsatz von Kaolin wird ein so genannter "hyper-platy", nanoskalierter Typ mit einem Shape-Faktor von mind. 40 verwendet. Bevorzugt ist ein Shape-Faktor zwischen 60 und 100 und eine Größe von max. 1 µm.

Weitere Füllstoffe wie natürliche und/oder synthetische Alumosilikate mit definierten Porenvolumina von 3-10 Å, 8-13 Ä und 10-15 Ä oder mehr Angström können allein bzw. in Kombination mit sphärischen bzw. plättchenförmigen Füllstoffen zugesetzt, bzw. als Mischungen daraus zugesetzt werden.

Weiterhin können natürliche organische Füllstoffe wie Cellulosefasern und/oder Celluloseregeneratfasern, insbes. mikro- und nanofibrillierte Zellulosen, als Füllstoffe verwendet werden. Diese Füllstoffe können alleine oder in Kombination mit einem oder mehreren anderen Füllstoffen verwendet werden.

In einer weiteren Ausgestaltung ist vorgesehen, dass die wässrige Zusammensetzung grundsätzlich frei von Bor-Verbindungen wie beispielsweise Borax, frei von in Wasser quellfähigen Silicaten, insbesondere von quellfähigen Schichtsilikaten, und/oder frei von Hydrogensulfitaddukten ausgebildet ist, um eine hohe chemische und mechanische Beständigkeit bei gleichzeitig hoher Lebensmittelverträglichkeit der resultierenden Sperrschicht 22 sicherzustellen.

Neben Füllstoffen und/oder Pigmenten können Additive in Form von kolloidalen Dispersionen zugegeben werden, die neben einer Sperrwirkung gegenüber hydrophoben Stoffen den Gesamtfeststoffgehalt der wässrigen Zusammensetzung erhöhen und die Viskosität nicht oder nicht signifikant verändern.

### 3. Auftragen der wässrigen Zusammensetzung

Eine gemäß den vorstehend beschriebenen Rezepturen hergestellte wässrige Zusammensetzung wird auf das gestrichene oder bevorzugt ungestrichene Substrat 12 aufgebracht. Das Basismaterial 14 des Substrats 12 besteht aus Karton und weist ein Flächengewicht zwischen 200 g/m² und 800 g/m² auf.

### 3.1. Auftragsmöglichkeiten und Schichtanordnung

### 3.1.1. Einschichtiger Nassfilmauftrag

Das Substrat 12 kann zur Herstellung einer einzelnen Sperrschicht 22 mit wässrigen Zusammensetzungen bestehend aus:
- Polyvinylalkohol + Glyoxal;
- Polyvinylalkohol + Dicarbonsäuren;
- Polyvinylalkohol + Polyacrylsäuren;
- Polyvinylalkohol + Dicarbonsäuren + Füllstoffe und/oder Pigmente;
- Polyvinylalkohol + Polyacrylsäuren + Dicarbonsäuren + Füllstoffe und/oder Pigmente;
- Polyvinylalkohol + FeCl₃; oder
- Polyvinylalkohol + Mischung von unterschiedlichen Vernetzungsmitteln;
- Polyvinylalkohol + Mischung von unterschiedlichen Vernetzungsmitteln + Füllstoffen und/oder Pigmenten;
beschichtet werden, wobei der Nassfilmauftrag 3 bis 15 g/m² betragen kann. Es ist dabei zu betonen, dass das Substrat 12 alternativ grundsätzlich bereits aus einem mit unvernetztem Polyvinylalkohol beschichteten Basismaterial 14 bestehen kann, wobei dem unvernetztem Polyvinylalkohol bedarfsweise Füllstoffe und/oder Pigmente beigemischt sein können.

Weitere Ausführungsbeispiele für die im Rahmen der Erfindung verwendbare wässrige Zusammensetzung sind in Tabelle 1 angegeben.

Die in Tabelle angegebenen Mengen an Polyvinylalkohol sind immer als 100 Teile anzusehen. Die Menge des Vernetzungsmittels ist immer auf die 100 Teile Polyvinylalkohol bezogen.

**Tabelle 1: Inhaltsstoffe der wässrigen Zusammensetzung**

| Hauptkomponente | | | Teile | Teile | Teile |
|---|---|---|---|---|---|
| PVOH | Hydrolysegrad: 80->99 % | 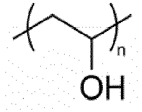 | 100 | 100 | 100 |
| | | | | | |

| Vernetzungsmittel/ Verbindungsklasse | Chem. Verbindung | Strukturformel | Teile - min. Anzahl | Teile - max. Anzahl | Teile bevorzugt |
|---|---|---|---|---|---|
| Dialdehyde, ungesättigte Aldehyde | Glyoxal | 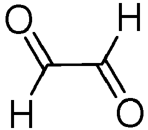 | 1 | 50 | 10-30 |
| | Glutaraldehyd | 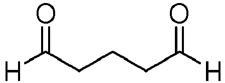 | 1 | 50 | 5-25 |
| | Acrylaldehyd | 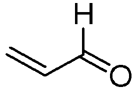 | 1 | 50 | 5-20 |
| Polycarbonsäuren, ungesättigte Carbonsäuren, Carbonsäureester | Malonsäure | 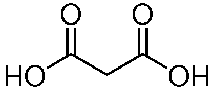 | 1 | 50 | 10-30 |
| | Glutarsäure | 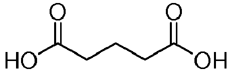 | 1 | 50 | 10-30 |
| | Adipinsäure | 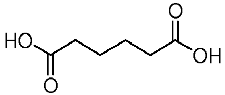 | 1 | 50 | 10-30 |
| | Zitronensäure | 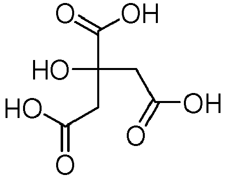 | 1 | 50 | 2-10 |
| | Butantetracarbonsäureanhydrid | 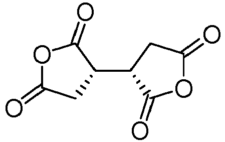 | 0.1 | 25 | 1-10 |
| | Acrylsäure | 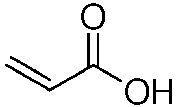 | 0.1 | 25 | 1-10 |
| | Methacrylsäure | 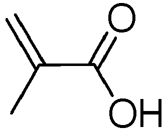 | 0.1 | 25 | 1-10 |
| | Maleinsäure | 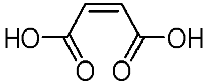 | 0.1 | 25 | 1-10 |
| | Methacrylmethylester | 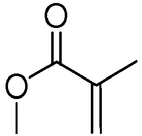 | 0.1 | 25 | 5-20 |
| | Hydroxyethylmethacryl at | 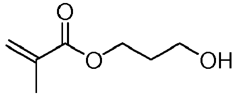 | 0.1 | 25 | 5-20 |
| FeCl₃ | FeCl₃ | | 0.1 | 20 | 1-10 |
| Silane | TEOS | 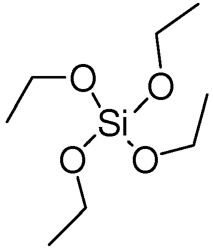 | 0.1 | 10 | 1-10 |
| Harnstoff-Formaldehyd-Harz (z. B. Urecoll®) | | | 0.1 | 20 | 1-10 |
| Polyacrylsäure | | 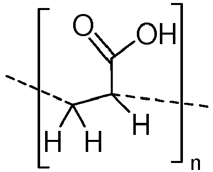 | 0.01 | 25 | 0.1-10 |

### 3.1.2. Mehrschichtiger Auftrag

Bei Bedarf können mehrschichtige Schichtsysteme 20 mit zwei, drei, vier oder fünf nacheinander aufgebrachten Sperrschichten 22 hergestellt werden. Eine wässrige Polyvinylalkohol-Lösung ohne Vernetzungsmittel kann auch in diesem Fall als erster Konditionierungsstrich bzw. als Primer verwendet werden. Alternativ oder zusätzlich kann die unvernetzte Polyvinylalkohol-Schicht zwischen zwei Sperrschichten 22 und/oder wie in Fig. 1 gezeigt als abschließende Schicht 24 aufgebracht werden. Die unvernetzte bzw. vernetzte Polyvinylalkoholschicht kann mit Füllstoffen und/oder Pigmenten gefüllt sein. Das Trockengewicht jeder Schicht 24 und/oder Sperrschicht 22 kann wiederum 3 bis 15 g/m² betragen.

### 3.2. Auftragssysteme

Die unter 3.1.1. und 3.1.2. beschriebenen Schichtsysteme 20 können mit in der Beschichtungs- und Papierindustrie gängigen Auftragswerkzeugen mittels Sprühen, Rakeln, Gießen oder einem gleichwertigen Konturstreichverfahren aufgetragen werden. Geeignete Parameterwerte sind beispielsweise:
Rollrakel: 10, 20, 40, 60, 80 µm Nassfilmdicke
Filmziehrahmen: variable Spalteinstellung, 0-1000 µm Nassfilmdicke
Filmziehrahmen: fixer Spalt: 20, 40 60, 70, 100, 120 µm Nassfilmdicke

Diese Auftragswerkzeuge werden mittels eines motorgesteuerten Auftragssystems mit einer Maximalgeschwindigkeit des Substrats 12 von bis zu 1000 m/min, beispielsweise 80 mm/s bzw. 4,8-5 m/min für einen gleichmäßigen Auftrag eingesetzt.

Alternativ oder zusätzlich wird ein Düsenauftragssystem verwendet, welches gleichzeitig mindestens eine Sperrschicht 22 bzw. Schicht 24 und maximal vier Schichten auf das sich in horizontaler Richtung bewegliche Karton-Substrat 12 aufbringt. Die Durchmischung der wässrigen Zusammensetzungen kann in der Düsenkammer, im Düsenspalt (Spaltbreite z. B. 0.1-1.0 mm) oder außerhalb der Düse am Substrat 12 erfolgen. Nassfilmschichtdicken über 200 µm sind mit diesem Auftragsverfahren möglich. Aus den Parametern "Schichtdicke" und "Maximalgeschwindigkeit" des Linearantriebs ergibt sich die benötigte Fördermenge der wässrigen Zusammensetzung.

### 4. Trocknung und Vernetzung der Nassfilme mittels IR-Strahlung (IR), Konvektionstrocknung (KV) und/oder UV-Strahlung (UV)

Das Lösungsmittel (Wasser) der auf das Substrat 12 aufgebrachten wässrigen Zusammensetzung wird mit Infrarot- und/oder Konvektionstrocknern ausgetragen. Beide Trocknertypen können einzeln, gemeinsam, hintereinander geschaltet oder unabhängig voneinander verwendet werden. Die Trocknertemperaturen beider Trocknertypen können beispielsweise zwischen 60 °C und 200 °C gewählt werden. Zu- bzw. Abluft und Temperatureinstellungen der Trockner bzw. der Trocknerkombination werden vorzugsweise so gewählt, dass ein blasenfreies Schichtsystem 20 entsteht. Eine Restfeuchte von 7-9 Gew.-% im Substrat 12 kann als Kriterium für die genaue Temperatureinstellung herangezogen werden.

Alle Sperrschichten 22 bzw. Schichten 24 werden bevorzugt zuerst mit IR und/oder KV getrocknet. Bei wässrigen Zusammensetzungen, die als Vernetzungsmittel Dialdehyde und/oder Dicarbonsäuren, Polysäuren und/oder Mischungen davon (siehe 2.1 bis 2.5) enthalten, ist die so zugeführte Wärme ausreichend, um die Quervernetzung des Polyvinylalkohols praktisch quantitativ durchzuführen.

Die Vernetzungsreaktion mit FeCl₃ ist ein zweistufiger Prozess. Nach dem zumindest überwiegenden Entfernen des Lösungsmittels wird die zumindest weitgehend trockene Beschichtung mit UV-Licht bestrahlt. Hierzu kann beispielsweise eine Hg-Dampf-Hochdrucklampe verwendet werden. Die Belichtung der UV-aktiven Polyvinylalkoholschicht dauert bei einer Intensitätsvorgabe von 75 % ungefähr 10 s bei einer Leistung von etwa 0,4 W/cm².

Grundsätzlich empfiehlt es sich, alle wässrigen Zusammensetzungen, die UV-aktive Vernetzungsmittel enthalten, vor, während und/oder nach der thermischen Trocknung mit UV-Licht zu bestrahlen.

### 5. Prüfungsverfahren

### 5.1. Messung der Sperrwirkung gegenüber hydrophoben Kohlenwasserstoffen

Das in Fig. 1 gezeigte Verpackungsmaterials 10 wurde einer Migrationsuntersuchung mit dem Lebensmittelsimulanz Tenax® in Anlehnung an die Prüfnormen DIN EN 1186-13 und DIN EN 14338 unterworfen, wobei das Tenax® auf das Schichtsystem 20 des Verpackungsmaterials 10 aufgebracht wurde. Nach Inkubation des Migrationsansatzes bei definierter Temperatur und Zeit wurden die migrierten Substanzen mittels n-Hexan vom Tenax® eluiert und die Mineralöl-Kohlenwasserstoffe mittels Flüssigkeitschromatografie spezifisch in zwei unterschiedlichen Fraktionen, nämlich die Fraktion der gesättigten (mineral oil saturated hydrocarbons, MOSH) und die Fraktion der aromatischen Kohlenwasserstoffen (mineral oil aromatic hydrocarbons, MOAH), aufgetrennt. Die beiden so erhaltenen Fraktionen wurden gaschromatographisch analysiert und als Summenparameter erfasst, wobei für die Auswertung der Signalflächensummen deuteriertes n-Nonadecan bzw. Diethylnaphthalin zum Einsatz kamen. In Bezug auf die extrahierbare Ausgangsmenge an Mineralöl-Kohlenwasserstoffen aus dem Rohverpackungsmaterial, welche die Summe aller migrierfähigen Komponenten definiert, wurde im Tenax®-Eluat weniger als 1 % der migrierfähigen Substanzen nachgewiesen. Die Migration der hydrophoben Kohlenwasserstoffe wird somit zu mehr als 99 % verhindert und liegt daher für Mineralöle immer unter einem Wert von 0,6 mg/kg verpacktem Lebensmittel.

Für den maximalen Übergang von MOSH wurde ein temporärer Wert von 0,6 mg/kg festgelegt. Darauf aufbauend wurde für Kohlenwasserstoffverbindungen mit einer Kohlenstoffzahl zwischen 10 und 16 vom BfR 2011 ein temporärer Wert von 12 mg/kg festgelegt. Für die MOAH-Komponenten soll laut Entwurf der 22. Verordnung zur Änderung der Bedarfsgegenständeverordnung (Mineralölverordnung) ein Wert von 0,15 mg/kg nicht nachweisbar sein. Die Migration von hydrophoben Verbindungen liegt damit unter dem geforderten Wert von 0,12 mg/kg.

### 5.2. Schichtaufbau

Zur Charakterisierung des Schichtaufbaus des Schichtsystems 20 wurde ein Semidünnschnitt angefertigt, anhand welchem die einzelnen Schichten 22a, 22b und 24 mit einem optischen und einem IR- oder Raman-Mikroskop spektroskopisch identifiziert wurden. Die Beurteilung der Geschlossenheit und Gleichmäßigkeit der aufgebrachten Schicht wird mittels FTIR-Mikroskopie durchgeführt.

### 6. Weitere Ausführungsbeispiele

Im Folgenden werden weitere Ausführungsbeispiele für das erfindungsgemäße Verpackungsmaterial 10 angegeben. Sofern nichts anderes angegeben ist, erfolgte die Herstellung in der vorstehend beschriebenen Weise.

### 6.1. Beispiel 1

Im Folgenden wird zunächst die Herstellung eines beschichteten Substrats 12 erläutert:
Basismaterial 14: Karton mit einer flächenbezogenen Masse zwischen 200-800 g/m², bevorzugt ungestrichen
Zusammensetzung (nicht vernetzend) zum Beschichten:
- Wässrige Polyvinylalkohol-Lösung (Elvanol 90-50 oder Elvanol 85-82, Dupont bzw. Mischungen davon)
- Feststoffgehalt: 10,00 Gew.-%
Beschichten des Karton-Basismaterials 14 mit der Zusammensetzung (40-200 µm Nassfilmschichtdicke)
Auftragsverfahren: Rakel, Luftbürste, Düse
Geschwindigkeit des Substrats 12: bis 1000 m/min
Trocknung: IR & Konvektion bis zum Erreichen von 5-7 % Restfeuchte im Basismaterial 14.

Das derart hergestellte Substrat 12 kann als Ausgangsmaterial für den Auftrag einer oder mehrerer Sperrschichten 22 verwendet werden.

### 6.2. Beispiel 2

Basismaterial 14: Karton mit einer flächenbezogenen Masse zwischen 200-800 g/m², bevorzugt ungestrichen
Wässrige Zusammensetzung (vernetzend):
- Wässrige Polyvinylalkohol-Lösung (Elvanol 90-50 oder Elvanol 85-82, Dupont bzw. Mischungen davon), Pigmente (gemäß Punkt 2.5)
- Als Vernetzer kommen die in Punkt 3.1.1 aufgeführten Vernetzer oder Mischungen dieser infrage
- Feststoffgehalt: bis zu 25,00 Gew.-%
Beschichten des Karton-Basismaterials 14 mit der wässrigen Zusammensetzung (40-200 µm Nassfilmschichtdicke)
Auftragsverfahren: Rakel, Luftbürste, Düse
Geschwindigkeit des Substrats 12: bis 1000 m/min
Trocknung: IR & Konvektion bis zum Erreichen von 5-7 % Restfeuchte im Basismaterial 14

### 6.3. Beispiel 3

Basismaterial 14: Karton mit einer flächenbezogenen Masse zwischen 200-800 g/m², bevorzugt ungestrichen
Zusammensetzung (nicht vernetzend):
- Wässrige Polyvinylalkohol-Lösung (Elvanol 90-50 oder Elvanol 85-82, Dupont bzw. Mischungen davon), gefüllt mit Pigmenten (vgl. Punkt 2.5)
- Feststoffgehalt: bis zu 25,00 Gew.-%
Beschichten des Karton-Basismaterials 14 bzw. des Substrats 12 mit der Zusammensetzung (40-200 µm Nassfilmschichtdicke)
Auftragsverfahren: Rakel, Luftbürste, Düse
Geschwindigkeit des Substrats 12: bis 1000 m/min
Trocknung: IR & Konvektion bis zum Erreichen von 5-7 % Restfeuchte im Basismaterial 14

### 6.4. Beispiel 4

Basismaterial 14: Karton mit einer flächenbezogenen Masse zwischen 200-800 g/m², bevorzugt ungestrichen
Zusammensetzung (physikalisch vernetzend):
- Wässrige Polyvinylalkohol-Lösung (Elvanol 90-50 oder Elvanol 85-82, Dupont bzw. Mischungen davon), gefüllt mit Alumosilikaten und Carboxymethylcellulose
- Feststoffgehalt: 12 Gew.-%
Beschichten des Karton-Basismaterials 14 mit der Zusammensetzung (40-200 µm Nassfilmschichtdicke)
Auftragsverfahren: Düse, Einschichtauftrag
Geschwindigkeit des Basismaterials: bis 1000 m/min
Trocknung: IR & Konvektion bis zum Erreichen von 5-7 % Restfeuchte im Karton

### 6.5. Beispiel 5

Substrat 12: Karton mit einer flächenbezogenen Masse zwischen 200-800 g/m², gestrichen oder bevorzugt ungestrichen
Wässrige Zusammensetzung (thermisch vernetzend bzw. härtend):
- Wässrige PVOH-Lösung, Feststoffgehalt 10 Gew.-% (Elvanol 85-82 bzw. Elvanol 90-50 und Mischungen davon, Dupont), 100-Teile
- Maleinsäure, p. a. (Sigma), 5 Teile bezogen auf 100 Teile PVOH
Beschichten des Substrats mit der wässrigen Zusammensetzung (1-Schicht-Auftrag, 40-200 µm Nassfilmschichtdicke)
Auftragsverfahren: Düse, Einschichtauftrag
Geschwindigkeit des Substrats 12: bis 1000 m/min
Trocknung: IR & Konvektion bis zum Erreichen von 5-7 % Restfeuchte im Basismaterial 14

### 6.6. Beispiel 6

Basismaterial 14: Karton mit einer flächenbezogenen Masse zwischen 200-800 g/m², gestrichen oder bevorzugt ungestrichen
Wässrige Zusammensetzung (UV-härtend):
- Wässrige PVOH-Lösung, Feststoffgehalt 10 Gew.-% (Elvanol 85-82 bzw. Elvanol 90-50 und Mischungen davon, Dupont), 100-Teile
- Wässrige FeCl₃-Lösung (Donau Chemie), Feststoffgehalt 46,33 Gew.-%, 6,7-Teile bezogen auf 100 Teile PVOH
Beschichten des Substrats mit der wässrigen Zusammensetzung (1-Schicht-Auftrag, 40-200 µm Nassfilmschichtdicke)
Auftragsverfahren: Düse, Einschichtauftrag
Geschwindigkeit des Basismaterials: bis 1000 m/min
UV Härtung mit Hg-Dampf-Hochdrucklampe, 10 s Belichtung, 0,4 W/cm² Leistung

### 6.7. Beispiel 7

Basismaterial 14: Karton mit einer flächenbezogenen Masse zwischen 200-800 g/m², gestrichen oder bevorzugt ungestrichen
Wässrige Zusammensetzung (thermisch härtend):
- Wässrige PVOH-Lösung, Feststoffgehalt 10 Gew.-% (PVOH-8582 bzw. Elvanol 9050 und Mischungen davon, Dupont), 100 Teile
- Glyoxal (40%ige wässrige Lösung, BASF), 12,6 Teile bezogen auf 100 Teile PVOH
Beschichten des Substrats mit der wässrigen Zusammensetzung (1-Schicht-Auftrag, 40-200 µm Nassfilmschichtdicke)
Auftragsverfahren: Düse, Einschichtauftrag
Geschwindigkeit des Basismaterials: bis 1000 m/min
Trocknung: IR & Konvektion bis zum Erreichen von 5-7 % Restfeuchte im Karton-Basismaterial 14.

### 6.8. Beispiel 8

Basismaterial 14: Papier mit einer flächenbezogenen Masse zwischen 50-150 g/m², gestrichen oder bevorzugt ungestrichen
Wässrige Zusammensetzung (thermisch härtend):
- Wässrige PVOH-Lösung, Feststoffgehalt 10 Gew.-% (PVOH-8582 bzw. Elvanol 9050 bzw. Mischungen davon, Dupont), 100 Teile
- Polyacrylsäure, 0,01-5,0 Teile bezogen auf 100 Teile PVOH
Beschichten des Substrats mit der wässrigen Zusammensetzung (1-Schicht-Auftrag, 40-200 µm Nassfilmschichtdicke)
Auftragsverfahren: Düse, Einschichtauftrag
Geschwindigkeit des Basismaterials: bis 1000 m/min
Trocknung: IR & Konvektion bis zum Erreichen von 5-7 % Restfeuchte im Basismaterial 14.

### 6.9. Beispiel 9

Basismaterial 14: Karton mit einer flächenbezogenen Masse zwischen 200-800 g/m², gestrichen oder bevorzugt ungestrichen
Zusammensetzungen: Kombination aus Beispiel 1 und Beispiel 2, Beispiel 1 und Beispiel 3, Beispiel 1 und Beispiel 4, Beispiel 1 und Beispiel 5, Beispiel 1 und Beispiel 6, Beispiel 1 und Beispiel 7, oder Beispiel 1 und Beispiel 8
Die Beschichtung aus Beispiel 1 wird als unterste Schicht auf das Basismaterial getragen, darauf wird die Beschichtung gemäß der Rezeptur aus Beispiel 2, 3, 4, 5, 6, 7 oder 8 und/oder Zwei- oder Dreifachkombinationen dieser Beispiele aufgebracht.
Mehrschichtauftrag, jeweils 80-200 µm Nassfilmschichtdicke
Geschwindigkeit des Basismaterials: bis 1000 m/min
Auftragsverfahren: Rakel, Düse

### 6.10. Beispiel 10

Basismaterial: Karton mit einer flächenbezogenen Masse zwischen 200-800 g/m², gestrichen oder bevorzugt ungestrichen
Zusammensetzungen:
Kombination aus 2 Strichen (wässrigen Zusammensetzungen) aus Beispiel 1 und einem Strich aus Beispiel 2 bis Beispiel 8. Der Strich aus Beispiel 1 wird in dieser Anwendung als Konditionierungs- und Deckstrich genutzt, um auf der Innenseite 18 des Substrats 12 nivellierend und auf der Außenseite 16 des Substrats 12 schützend gegenüber Zug und Stauchen (Kräfte, die bei Rill- und Stanzvorgängen auftreten) zu wirken. Der Deckstrich ist leicht bedruckbar und verklebbar.
Mehrschichtauftrag, jeweils 80-200 µm Nassfilmschichtdicke
Auftragsverfahren: Rakel, Düse
Geschwindigkeit des Basismaterials: bis 1000 m/min
Trocknung: IR & Konvektion bis zum Erreichen von 5-7 % Restfeuchte im Karton.

### 6.11. Beispiel 11

Basismaterial: Karton mit einer flächenbezogenen Masse zwischen 200-800 g/m², gestrichen oder bevorzugt ungestrichen
Zusammensetzungen:
Wässrige PVOH-Lösung (Elvanol 9050 oder Elvanol 8582, Selvol 103 oder 107, Mowiol 15-99 oder 9-98, Exceval Aq 4104 oder Mischungen davon).
Nassfilmdicke: 20 - 200 µm.
Feststoffgehalte PVOH Lösungen: maximal 30 Gew.-%
Gesamtfeststoffgehalte gefüllte PVOH Lösungen inkl. Vernetzer: 35 - 45 Gew.-%.
Trocknung bis zum Erreichen einer Restfeuchte zwischen 7 und 9 Gew.-% im Basismaterial 14.

### 6.12. Beispiel 12

Wässrige Zusammensetzung: PVOH-Gehalt maximal 30 Gew.-%, gefüllt mit Pigmenten, Zugabe einer kolloidalen Polyacrylat-Dispersion als Additiv Gesamtfeststoffgehalt der wässrigen Zusammensetzung: max. 45 Gew.-%
Weitere Verarbeitung wie in den vorhergehenden Ausführungsbeispielen.

### 6.13. Beispiel 13

Wässrige Zusammensetzung: PVOH-Gehalt maximal 30 Gew.-%, gefüllt mit Pigmenten, Zugabe von mikrokristalliner Cellulose (max. 1%) und Acrylatdispersion als Additive; Gesamtfeststoffgehalt: max. 45 Gew.-%
Weitere Verarbeitung wie in den vorhergehenden Ausführungsbeispielen.

### 6.14. Beispiel 14

Kombination aus zwei unterschiedlichen wässrigen Zusammensetzungen (Strichen) der vorhergehenden Ausführungsbeispiele zur Herstellung von zwei unterschiedlichen Sperrschichten 22a, 22b.
Weitere Verarbeitung wie in den vorhergehenden Ausführungsbeispielen.

### 6.15. Beispiel 15

Basismaterial 14: Karton mit einer flächenbezogenen Masse zwischen 200-800 g/m², bevorzugt ungestrichen
Zusammensetzung (nicht vernetzend) zum Beschichten:
- Wässrige Polyvinylalkohol-Lösung (Selvol 103 oder Selvol 107, Sekisui, Exceval, Kuraray bzw. Mischungen davon)
- Feststoffgehalt PVOH (=Gesamtfeststoffgehalt): 30,00 Gew.-%
Beschichten des Karton-Basismaterials 14 mit der Zusammensetzung (10-200 µm Nassfilmschichtdicke)
Auftragsverfahren: Rakel, Düse bei 30 bis 80 °C
Geschwindigkeit des Substrats 12: bis 1000 m/min
Trocknung: IR & Konvektion bis zum Erreichen von 7-10 % Restfeuchte im Basismaterial 14.

Das derart hergestellte Substrat 12 kann als Ausgangsmaterial für den Auftrag einer oder mehrerer Sperrschichten 22 verwendet werden.

### 6.16. Beispiel 16

Basismaterial 14: Karton mit einer flächenbezogenen Masse zwischen 200-800 g/m², bevorzugt ungestrichen
Wässrige Zusammensetzung (vernetzend):
- Wässrige Polyvinylalkohol-Lösung (Selvol 103 oder Selvol 107, Sekisui, Exceval, Kuraray bzw. Mischungen davon), Pigmente
- Als Vernetzer kommen die vorstehend aufgeführten Vernetzer oder Mischungen davon infrage
- Gesamtfeststoffgehalt: bis zu 45,00 Gew.-%
Beschichten des Karton-Basismaterials 14 mit der wässrigen Zusammensetzung (10-200 µm Nassfilmschichtdicke)
Auftragsverfahren: Rakel, Düse bei 30 bis 80 °C
Geschwindigkeit des Substrats 12: bis 1000 m/min
Trocknung: IR & Konvektion bis zum Erreichen von 7-10 % Restfeuchte im Basismaterial 14

### 6.17. Beispiel 17

Basismaterial 14: Karton mit einer flächenbezogenen Masse zwischen 200-800 g/m², bevorzugt ungestrichen
Wässrige Zusammensetzung, vernetzend, ohne Füllstoff:
- Wässrige Polyvinylalkohol-Lösung (Selvol 103 oder Selvol 107, Sekisui, Exceval, Kuraray bzw. Mischungen davon)
- Als Vernetzer kommen die vorstehend aufgeführten Vernetzer oder Mischungen dieser infrage
- Gesamtfeststoffgehalt: bis zu 30,00 Gew.-%
Beschichten des Karton-Basismaterials 14 mit der wässrigen Zusammensetzung (10-200 µm Nassfilmschichtdicke)
Auftragsverfahren: Rakel, Düse bei 30 bis 80 °C
Geschwindigkeit des Substrats 12: bis 1000 m/min
Trocknung: IR & Konvektion bis zum Erreichen von 7-10 % Restfeuchte im Basismaterial 14

### 6.18. Beispiel 18

Basismaterial 14: Karton mit einer flächenbezogenen Masse zwischen 200-800 g/m², bevorzugt ungestrichen
Wässrige Zusammensetzung (physikalisch vernetzend):
- Wässrige Polyvinylalkohol-Lösung (Selvol 103 oder Selvol 107, Sekisui, Exceval, Kuraray bzw. Mischungen davon), kolloidale Poly(meth)acrylat-Dispersion und Carboxymethylcellulose
- Gesamtfeststoffgehalt: 25-45 Gew.-%
Beschichten des Karton-Basismaterials 14 mit der Zusammensetzung (10-200 µm Nassfilmschichtdicke)
Auftragsverfahren: Düse, Einschichtauftrag bei 30 bis 80 °C
Geschwindigkeit des Basismaterials: bis 1000 m/min
Trocknung: IR & Konvektion bis zum Erreichen von 7-10% Restfeuchte im Karton

### 6.19. Beispiel 19

Substrat 12 bzw. Basismaterial 14: Karton mit einer flächenbezogenen Masse zwischen 200-800 g/m2, gestrichen oder bevorzugt ungestrichen
Wässrige Zusammensetzung (thermisch vernetzend bzw. härtend):
- Wässrige PVOH-Lösung, Feststoffgehalt 10-20 Gew.-% (Selvol 103 oder Selvol 107, Sekisui, Exceval, Kuraray bzw. Mischungen davon), 100-Teile
- Pigmente, 60 Teile bezogen auf 100 Teile PVOH
- Maleinsäure (DSM) als Vernetzer, 5 Teile bezogen auf 100 Teile PVOH
- Gesamtfeststoffgehalt: 17-35 Gew.-%
Beschichten des Substrats 12 mit der wässrigen Zusammensetzung (1-Schicht-Auftrag, 10-200 µm Nassfilmschichtdicke)
Auftragsverfahren: Düse, Einschichtauftrag bei 30 bis 80 °C
Geschwindigkeit des Substrats 12: bis 1000 m/min
Trocknung: IR & Konvektion bis zum Erreichen von 7-10 % Restfeuchte im Basismaterial 14

### 6.20. Beispiel 20

Substrat 12 bzw. Basismaterial 14: Karton mit einer flächenbezogenen Masse zwischen 200-800 g/m², gestrichen oder bevorzugt ungestrichen
Wässrige Zusammensetzung (thermisch vernetzend):
- Wässrige PVOH-Lösung, Feststoffgehalt 10-22 Gew.-% (Selvol 103 oder Selvol 107, Sekisui, Exceval, Kuraray bzw. Mischungen davon), 100-Teile
- Pigmente, 20-50 Teile bezogen auf 100 Teile PVOH
- Maleinsäure als Vernetzer, 5-10 Teile bezogen auf 100 Teile PVOH
- Gesamtfeststoffgehalt: 18-35 Gew.-%
Beschichten des Substrats mit der wässrigen Zusammensetzung (1-Schicht-Auftrag, 10-200 µm Nassfilmschichtdicke)
Auftragsverfahren: Düse, Einschichtauftrag bei 30 bis 80 °C
Geschwindigkeit des Substrats 12: bis 1000 m/min
Trocknung: IR & Konvektion bis zum Erreichen von 7-10 % Restfeuchte im Basismaterial 14

### 6.21. Beispiel 21

Basismaterial 14: Karton mit einer flächenbezogenen Masse zwischen 200-800 g/m², bevorzugt ungestrichen
Zusammensetzung (physikalisch vernetzend):
- Wässrige Polyvinylalkohol-Lösung (Selvol 103 oder Selvol 107, Sekisui, Exceval, Kuraray bzw. Mischungen davon), 100 Teile
- Kolloidale Polymer-Dispersion, 20-40 Teile bezogen auf 100 Teile PVOH
- Pigmente, 20-50 Teile bezogen auf 100 Teile PVOH
- Vernetzer bzw. Mischungen davon, 5-10 Teile bezogen auf 100 Teile PVOH
- Gesamtfeststoffgehalt: 25-45 Gew.-%

### 6.22. Beispiel 21

Auftragen eines der vorstehenden Ausführungsbeispiele mit doppeltem Schlitz.

Durch das Aufteilen der wässrigen Zusammensetzung in die beiden Kammern und das anschließende Zusammenführen in einen Behälter wird überschüssige wässrige Zusammensetzung sortenrein aufgefangen.

### 6.23. Weitere Beispiele

Ausgehend von den vorstehend genannten Rezepturen sind weitere Variationen und Kombinationen möglich:
Alternative Vernetzer:
- 6,7 % FeCl₃ bezogen auf 100 % PVOH (bzw. PVOH-Copolymer)
- 12,6 % Glyoxal bezogen auf 100 % PVOH (bzw. PVOH-Copolymer)
- 0,01 bis 5 % Poly(meth)acrylsäure (Dispersion) bezogen auf 100 % PVOH
Auftragen von ein- und mehrschichtigen Beschichtungen mittels Rakel oder Düse, wobei die Zusammensetzungen der Beispiele 12, 13 und 17 als Konditionierungsschicht verwendet werden können.

### Kolloidale Dispersionen/Suspensionen

Kolloide sind makroskopische Teilchen, welche mit einer Größe von 1 - 1000 nm, in einem homogenen Dispersionsmedium verteilt sind. Kolloidale Dispersionen erscheinen farblos, wenn der Zerteilungsgrad der Kolloide bei 500 nm liegt. Die Stabilität von Kolloiden ist unter anderem abhängig von den Faktoren pH-Wert, Dispergiermittel, Additive (oberflächenaktive Stoffe), Neigung zu Micellenbildung etc. Von kolloidalen Teilchen in z.B. wässrigem System spricht man, wenn das Molekulargewicht (Mr) > 1000 g/mol ist. Besitzen die Teilchen ein Mr < 1000 g/mol, so spricht man häufig von molekularen Lösungen. Dispersionen bestehen aus makromolekularen Molekülen, die teilweise oder vollständig vernetzt sein können und die aufgrund ihres Molekulargewichts nicht mehr in Lösung gehen. Beispiele für polymere, polare Dispersionen sind:
- Poly(meth)acrylate,
- Polymethylmethacrylate
- Polyethylenglykolacrylate
- Polyamide
- Polyester (Bsp. Acrylsäureester, Vinylester, Biopolymere wie Polymilchsäureester, PHA, Polyhydroxybutyrat, PHB)
- Polyurethane
- Styrol-Butadien-Copolymere
- Kohlenhydratkolloide wie Cellulose, Stärke, Dextrin, Chitosan
- Proteine
- Polyvinylacrylatdispersionen bzw. Copolymer Dispersionen davon.

Weiterhin gibt es noch organisch-anorganische Hybrid-Polymerdispersionen, die kolloidal vorliegen. Beispiele dafür sind Tetraorthosilikate (TEOS), die mittels Sol-Gel Reaktion mit funktionellen organischen Gruppen modifiziert werden. In die Gruppe der anorganischen Kolloide fallen alle anorganischen Pigmente, Füllstoffe, Additive, Katalysatoren, die Teilchengrößen von wenigen nm bis einigen µm besitzen und sich in einer flüssigen, festen oder gasförmigen Phase dispergieren lassen (gilt für alle Kolloide).

Die in den Unterlagen angegebenen Parameterwerte zur Definition von Prozess- und Messbedingungen für die Charakterisierung von spezifischen Eigenschaften des Erfindungsgegenstands sind auch im Rahmen von Abweichungen - beispielsweise aufgrund von Messfehlern, Systemfehlern, Einwaagefehlern, DIN-Toleranzen und dergleichen - als vom Rahmen der Erfindung mit umfasst anzusehen.

## Patentansprüche

1. Verfahren zum Herstellen eines beschichteten Verpackungsmaterials (10), umfassend zumindest die Schritte:
a) Bereitstellen eines Substrats (12), welches ein Basismaterial (14) aus Zellstoff, eine einem Verpackungsgut abzuwendende Außenseite (16) sowie eine dem Verpackungsgut zuzuwendende Innenseite (18) aufweist, wobei das Basismaterial (14) gestrichenes oder ungestrichenes Papier, gestrichener oder ungestrichener Karton oder gestrichene oder ungestrichene Pappe ist;
b) Beschichten zumindest der Innenseite (18) des Substrats mit wenigstens einer Schicht aus einer wässrigen Zusammensetzung, welche zumindest Polyvinylalkohol und/oder zumindest ein Polyvinylalkohol-Copolymer sowie ein Vernetzungsmittel umfasst, wobei die wässrige Zusammensetzung höchstens 40 Gew.-% Polyvinylalkohol und/oder Polyvinylalkohol-Copolymer und einen Gesamtfeststoffgehalt von mindestens 26 Gew.-% und höchstens 55 Gew.-% aufweist;
c) Trocknen der Schicht und Vernetzen des Polyvinylalkohols und/oder des Polyvinylalkohol-Copolymers mithilfe des Vernetzungsmittels unter Ausbildung einer Sperrschicht (22a, 22b) für hydrophobe Verbindungen,
wobei das Substrat (12) vor Schritt a) und/oder nach Schritt c) mit wenigstens einer weiteren wässrigen Zusammensetzung beschichtet wird, wobei
- die weitere wässrige Zusammensetzung zumindest Polyvinylalkohol und/oder ein Polyvinylalkohol-Copolymer umfasst und frei von Vernetzungsmitteln ist, und/oder wobei
- mindestens zwei Sperrschichten (22a, 22b) hergestellt werden, wobei die mindestens zwei Sperrschichten (22a, 22b) Polyvinylalkohole und/oder Polyvinylalkohol-Copolymere mit unterschiedlichen Vernetzungsgraden und/oder Polyvinylalkohole und/oder Polyvinylalkohol-Copolymere mit unterschiedlichen Hydrolysegraden und/oder mit unterschiedlichen Vernetzungsmitteln vernetzte Polyvinylalkohole und/oder Polyvinylalkohol-Copolymere umfassen.

2. Verfahren nach Anspruch 1,
**dadurch gekennzeichnet, dass**
eine wässrige Zusammensetzung:
- mit einem Gehalt an Polyvinylalkohol und/oder Polyvinylalkohol-Copolymer zwischen 2 Gew.-% und 35 Gew.-%, insbesondere zwischen 10 Gew.-% und 32 Gew.-% und vorzugsweise zwischen 26 Gew.-% und 30 Gew.-%; und/oder
- mit einem Gesamtfeststoffgehalt zwischen 26 Gew.-% und 52 Gew.-%, insbesondere zwischen 26 Gew.-% und 50 Gew.-% und vorzugsweise zwischen 26 Gew.-% und 45 Gew.-%; und/oder
- mit einem Wassergehalt von mindestens 45 Gew.-%, insbesondere von mindestens 55 Gew.-% und vorzugsweise mit einem Wassergehalt zwischen 65 Gew.-% und 70 Gew.-%
verwendet wird.

3. Verfahren nach einem der Ansprüche 1 oder 2,
**dadurch gekennzeichnet, dass**
Polyvinylalkohol und/oder ein Polyvinylalkohol-Copolymer mit:
- einem Hydrolysegrad zwischen 75 % und 100 %, insbesondere zwischen 80 % und 99,9 %; und/oder
- einem Polymerisationsgrad zwischen 100 und 3000, insbesondere zwischen 120 und 1200 und vorzugsweise zwischen 150 und 650; und/oder
- mit einem mittleren Molekulargewicht zwischen 11000 g/mol und 60000 g/mol, insbesondere zwischen 13000 g/mol und 23000 g/mol und/oder zwischen 31000 g/mol und 50000 g/mol
verwendet wird.

4. Verfahren nach einem der Ansprüche 1 bis 3,
**dadurch gekennzeichnet, dass**
eine wässrige Zusammensetzung verwendet wird, welche wenigstens ein weiteres Polymer und/oder Copolymer als Additiv umfasst.

5. Verfahren nach Anspruch 4,
**dadurch gekennzeichnet, dass**
das wenigstens eine weitere Polymer und/oder Copolymer in der wässrigen Zusammensetzung dispergiert wird und/oder dass das wenigstens eine weitere Polymer und/oder Copolymer aus einer Gruppe ausgewählt wird, die Poly(meth)acrylate, Polymethyl(meth)acrylate, Polyamide, Biopolymere, insbesondere Chitosan, Polyurethane, Polyvinylacrylate, Polyester, insbesondere Poly(meth)acrylsäureester, Polyvinylester, Polymilchsäureester, Polyhydroxyalkanoate, Polyhydroxybutyrat und/oder Polyhydroxybuttersäure, und/oder Copolymere hiervon umfasst.

6. Verfahren nach einem der Ansprüche 1 bis 5,
**dadurch gekennzeichnet, dass**
als Vernetzungsmittel:
- wenigstens eine olefinisch gesättigte und/oder ungesättigte Verbindung mit zumindest einer funktionellen Gruppe ausgewählt aus Aldehyd, Carbonsäure, Säureanhydrid und Aminogruppe; und/oder
- Eisenchlorid; und/oder
- ein Alkylorthosilikat, insbesondere Tetraethylorthosilikat; und/oder
- ein Harnstoff-Formaldehyd-Harz; und/oder
- ein physikalischer Vernetzer, insbesondere Carboxymethylcellulose
verwendet wird.

7. Verfahren nach einem der Ansprüche 1 bis 6,
**dadurch gekennzeichnet, dass**
eine wässrige Zusammensetzung verwendet wird, welche bezogen auf 100 Gewichtsanteile Polyvinylalkohol und/oder Polyvinylalkohol-Copolymer zwischen 0,01 und 55 Gewichtsanteile Vernetzungsmittel und/oder zwischen 1 und 60 Gewichtsanteile eines Füllstoffs und/oder eines Pigments umfasst.

8. Verfahren nach Anspruch 7,
**dadurch gekennzeichnet, dass**
ein Füllstoff und/oder ein Pigment verwendet wird, welches säurestabil ist und/oder zumindest im Wesentlichen sphärische und/oder plättchenförmige Partikelgeometrien aufweist.

9. Verfahren nach einem der Ansprüche 1 bis 8,
**dadurch gekennzeichnet, dass**
eine wässrige Zusammensetzung verwendet wird, die eine Viskosität zwischen 150 mPas und 2500 mPas, insbesondere zwischen 200 mPas und 1700 mPas aufweist.

10. Verfahren nach einem der Ansprüche 1 bis 9,
**dadurch gekennzeichnet, dass**
die wässrige Zusammensetzung derart auf das Substrat (12) aufgebracht wird, dass sich eine flächenbezogene Trockenmasse zwischen 1 g/m² und 20 g/m², insbesondere zwischen 3 g/m² und 15 g/m² ergibt, und/oder dass die wässrige Zusammensetzung derart auf das Substrat (12) aufgebracht wird, dass die Schicht eine Nassfilmdicke zwischen 1 µm und 1000 µm, insbesondere zwischen 10 µm und 200 µm aufweist.

11. Verfahren nach einem der Ansprüche 1 bis 10,
**dadurch gekennzeichnet, dass**
die wässrige Zusammensetzung mittels eines egalisierenden Streichverfahrens, insbesondere mittels Rakel, Klinge und/oder Filmpresse, und/oder mittels eines Konturstreichverfahrens, insbesondere mittels Gießen, Sprühen, Vorhangbeschichten und/oder Luftbürste auf das Substrat (12) aufgebracht wird.

12. Verfahren nach einem der Ansprüche 1 bis 11,
**dadurch gekennzeichnet, dass**
die wässrige Zusammensetzung mit einer Temperatur zwischen 30 °C und 85 °C, insbesondere zwischen 35 °C und 80 °C auf das Substrat (12) aufgebracht wird.

13. Verfahren nach einem der Ansprüche 1 bis 12,
**dadurch gekennzeichnet, dass**
das beschichtete Substrat (12) in Schritt c) mittels Infrarotbestrahlung und/oder mittels Konvektion und/oder unter UV-Bestrahlung getrocknet wird und/oder dass das beschichtete Substrat (12) bis zu einer Restfeuchte zwischen 3 Gew.-% und 12 Gew.-%, insbesondere zwischen 6 Gew.-% und 10 Gew.-% getrocknet wird.

14. Verfahren nach einem der Ansprüche 1 bis 13,
**dadurch gekennzeichnet, dass**
in Schritt a) ein Substrat (12) bereitgestellt wird, welches ein Basismaterial (14) umfasst, dessen Außenseite (16) mit einer Konditionierungsschicht und/oder einer Deckschicht versehen ist.

15. Verpackungsmaterial (10), welches durch ein Verfahren nach einem der Ansprüche 1 bis 14 erhalten ist, umfassend:
- ein Substrat (12), welches ein Basismaterial (14) aus Zellstoff, eine einem Verpackungsgut abzuwendende Außenseite (16) sowie eine dem Verpackungsgut zuzuwendende Innenseite (18) aufweist, wobei das Basismaterial (14) gestrichenes oder ungestrichenes Papier, gestrichener oder ungestrichener Karton oder gestrichene oder ungestrichene Pappe ist; und
- ein auf der Innenseite (18) des Substrats (12) angeordnetes Schichtsystem (20) mit wenigstens einer Sperrschicht (22a, 22b) für hydrophobe Verbindungen, wobei wenigstens eine Sperrschicht (22a, 22b) quervernetzten Polyvinylalkohol und/oder ein quervernetztes Polyvinylalkohol-Copolymer umfasst, und wobei das Schichtsystem (20) zusätzlich:
- wenigstens eine Schicht (24) umfasst, welche unvernetzten Polyvinylalkohol und/oder ein unvernetztes Polyvinylalkohol-Copolymer enthält, und/oder
- mindestens zwei Sperrschichten (22a, 22b) aus quervernetztem Polyvinylalkohol und/oder quervernetztem Polyvinylalkohol-Copolymer umfasst, wobei die Sperrschichten (22a, 22b) Polyvinylalkohole und/oder Polyvinylalkohol-Copolymere mit unterschiedlichen Vernetzungsgraden und/oder Polyvinylalkohole und/oder Polyvinylalkohol-Copolymere mit unterschiedlichen Hydrolysegraden und/oder mit unterschiedlichen Vernetzungsmitteln vernetzte Polyvinylalkohole und/oder Polyvinylalkohol-Copolymere umfassen.

16. Verpackungsmaterial (10) nach Anspruch 15,
**dadurch gekennzeichnet, dass**
das Schichtsystem (20) mindestens zwei Sperrschichten (22a, 22b) aus quervernetztem Polyvinylalkohol und/oder quervernetztem Polyvinylalkohol-Copolymer umfasst, wobei wenigstens eine Sperrschicht (22a, 22b) wenigstens einen Füllstoff und/oder wenigstens ein Pigment umfasst.

17. Verpackungsmaterial (10) nach Anspruch 15 oder 16,
**dadurch gekennzeichnet, dass**
das Schichtsystem (20) wenigstens eine Schicht (24) umfasst, welche unvernetzten Polyvinylalkohol und/oder ein unvernetztes Polyvinylalkohol-Copolymer enthält, wobei die den unvernetzten Polyvinylalkohol und/oder das unvernetzte Polyvinylalkohol-Copolymer enthaltende Schicht (24) unmittelbar auf der Innenseite (18) des Substrats (12) und/oder zwischen zwei Sperrschichten (22a, 22b) und/oder auf einer dem Basismaterial (14) abgewandten Seite einer Sperrschicht (22a, 22b) angeordnet ist.

## Claims

1. Method for producing a coated packaging material (10), including at least the steps of:
a) providing a substrate (12), which has a base material (14) of pulp, an outer side (16) to be faced away from the packaging item as well as an inner side (18) to be faced towards the packaging item, wherein the base material (14) is coated or uncoated paper, coated or uncoated cardboard, or coated or uncoated paperboard;
b) coating at least the inner side (18) of the substrate with at least one layer of an aqueous composition including at least polyvinyl alcohol and/or at least one polyvinyl alcohol copolymer as well as a cross-linking agent, wherein the aqueous composition has at most 40 % by wt. of polyvinyl alcohol and/or polyvinyl alcohol copolymer and a total solid content of at least 26 % by wt. and at most 55 % by wt.;
c) drying the layer and cross-linking the polyvinyl alcohol and/or the polyvinyl alcohol copolymer with the aid of the cross-linking agent with formation of a barrier layer (22a, 22b) for hydrophobic compounds,
wherein the substrate (12) before step a) and/or after step c) is coated with at least one further aqueous composition, wherein
- the further aqueous composition includes at least polyvinyl alcohol and/or a polyvinyl alcohol copolymer and is free of cross-linking agents, and/or wherein
- at least two barrier layers (22a, 22b) are formed, wherein the at least two barrier layers (22a, 22b) include polyvinyl alcohols and/or polyvinyl alcohol copolymers with different cross-linking levels and/or polyvinyl alcohols and/or polyvinyl alcohol copolymers with different degrees of hydrolysis and/or polyvinyl alcohols and/or polyvinyl alcohol copolymers cross-linked by different cross-linking agents.

2. Method according to claim 1,
**characterized in that**
an aqueous composition
- with a content of polyvinyl alcohol and/or polyvinyl alcohol copolymer between 2 % by wt. and 35 % by wt., in particular between 10 % by wt. and 32 % by wt. and preferably between 26 % by wt. and 30 % by wt.; and/or
- with a total solid content between 26 % by wt. and 52 % by wt., in particular between 26 % by wt. and 50 % by wt. and preferably between 26 % by wt. and 45 % by wt.; and/or
- with a water content of at least 45 % by wt., in particular of at least 55 % by wt. and preferably with a water content between 65 % by wt. and 70 % by wt.
is used.

3. Method according to any one of claims 1 or 2,
**characterized in that**
polyvinyl alcohol and/or a polyvinyl alcohol copolymer with:
- a degree of hydrolysis between 75 % and 100 %, in particular between 80 % and 99.9 %; and/or
- a degree of polymerization between 100 and 3000, in particular between 120 and 1200 and preferably between 150 and 650; and/or
- with an average molecular weight between 11000 g/mol and 60000 g/mol, in particular between 13000 g/mol and 23000 g/mol and/or between 31000 g/mol and 50000 g/mol
is used.

4. Method according to any one of claims 1 to 3,
**characterized in that**
an aqueous composition is used, which includes at least one further polymer and/or copolymer as an additive.

5. Method according to claim 4,
**characterized in that**
the at least one further polymer and/or copolymer is dispersed in the aqueous composition and/or that the at least one further polymer and/or copolymer is selected from a group including poly(meth)acrylates, polymethyl(meth)acrylates, polyamides, biopolymers, in particular chitosan, polyurethanes, polyvinylacrylates, polyesters, in particular poly(meth)acrylic acid esters, polyvinylesters, polylactic acid esters, polyhydroxyalkanoates, polyhydroxybutyrate and/or polyhydroxybutyric acid and/or copolymers hereof.

6. Method according to any one of claims 1 to 5,
**characterized in that**
as the cross-linking agent:
- at least one olefinically saturated and/or unsaturated compound with at least one functional group selected from aldehyde, carboxylic acid, acid anhydride and amino group; and/or
- iron chloride; and/or
- an alkylorthosilicate, in particular tetraethylorthosilicate; and/or
- an urea formaldehyde resin; and/or
- a physical cross-linker, in particular carboxymethylcellulose
is used.

7. Method according to any one of claims 1 to 6,
**characterized in that**
an aqueous composition is used, which includes between 0.01 and 55 portions of weight of cross-linking agent and/or between 1 and 60 portions of weight of a filler and/or a pigment related to 100 portions of weight of polyvinyl alcohol and/or polyvinyl alcohol copolymer.

8. Method according to claim 7,
**characterized in that**
a filler and/or a pigment is used, which is acid-stable and/or has at least substantially spherical and/or platelet-shaped particle geometries.

9. Method according to any one of claims 1 to 8,
**characterized in that**
an aqueous composition is used, which has a viscosity between 150 mPas and 2500 mPas, in particular between 200 mPas and 1700 mPas.

10. Method according to any one of claims 1 to 9,
**characterized in that**
the aqueous composition is applied to the substrate (12) such that an area-related dry mass between 1 g/m² and 20 g/m², in particular between 3 g/m² and 15 g/m² arises, and/or that the aqueous composition is applied to the substrate (12) such that the layer has a wet film thickness between 1 µm and 1000 µm, in particular between 10 µm and 200 µm.

11. Method according to any one of claims 1 to 10,
**characterized in that**
the aqueous composition is applied to the substrate (12) by means of an equalizing coating method, in particular by means of doctor blade, blade and/or film press, and/or by means of a contour coating method, in particular by means of casting, spraying, curtain coating and/or airbrush.

12. Method according to any one of claims 1 to 11,
**characterized in that**
the aqueous composition is applied to the substrate (12) at a temperature between 30 °C and 85 °C, in particular between 35 °C and 80 °C.

13. Method according to any one of claims 1 to 12,
**characterized in that**
the coated substrate (12) is dried in step c) by means of infrared irradiation and/or by means of convection and/or under UV irradiation and/or that the coated substrate (12) is dried up to a residual humidity between 3 % by wt. and 12 % by wt., in particular between 6 % by wt. and 10 % by wt.

14. Method according to any one of claims 1 to 13,
**characterized in that**
in step a), a substrate (12) is provided, which includes a base material (14), the outer side (16) of which is provided with a conditioning layer and/or a cover layer.

15. Packaging material (10) obtained through a method according to any one of claims 1 to 14, including:
- a substrate (12) having a base material (14) of pulp, an outer side (16) to be faced away from the packaging item as well as an inner side (18) to be faced towards the packaging item, wherein the base material (14) is coated or uncoated paper, coated or uncoated cardboard, or coated or uncoated paperboard; and
- a layer system (20) disposed on the inner side (18) of the substrate (12) with at least one barrier layer (22a, 22b) for hydrophobic compounds, wherein at least one barrier layer (22a, 22b) includes cross-linked polyvinyl alcohol and/or a cross-linked polyvinyl alcohol copolymer, and wherein the layer system (20) additionally:
- includes at least one layer (24), which contains non-cross-linked polyvinyl alcohol and/or a non-cross-linked polyvinyl alcohol copolymer and/or
- includes at least two barrier layers (22a, 22b) from cross-linked polyvinyl alcohol and/or cross-linked polyvinyl alcohol copolymer, wherein the barrier layers (22a, 22b) include polyvinyl alcohols and/or polyvinyl alcohol copolymers with different degrees of cross-linking and/or polyvinyl alcohols and/or polyvinyl alcohol copolymers with different degrees of hydrolysis and/or polyvinyl alcohols and/or polyvinyl alcohol copolymers cross-linked by different cross-linking agents.

16. Packaging material (10) according to claim 15,
**characterized in that**
the layer system (20) includes at least two barrier layers (22a, 22b) of cross-linked polyvinyl alcohol and/or cross-linked polyvinyl alcohol copolymer, wherein at least one barrier layer (22a, 22b) includes at least one filler and/or at least one pigment.

17. Packaging material (10) according to claim 15 or 16,
**characterized in that**
the layer system (20) includes at least one layer (24), which contains non-cross-linked polyvinyl alcohol and/or a non-cross-linked polyvinyl alcohol copolymer, wherein the layer (24) containing the non-cross-linked polyvinyl alcohol and/or the non-cross-linked polyvinyl alcohol copolymer is disposed directly on the inner side (18) of the substrate (12) and/or between two barrier layers (22a, 22b) and/or on a side of a barrier layer (22a, 22b) facing away from the base material (14).

## Revendications

1. Procédé de fabrication d'un matériau d'emballage enduit (10), comprenant au moins les étapes, consistant à
a) mettre à disposition un substrat (12), lequel présente un matériau de base (14) en cellulose, une face extérieure (16), à détourner d'un produit à emballer, ainsi qu'une face intérieure (18), à tourner vers le produit à emballer, le matériau de base (14) étant du papier couché ou non couché, du carton couché ou non couché ou du carton épais couché ou non couché ;
b) enduire au moins la face intérieure (18) du substrat avec au moins une couche d'une composition aqueuse, laquelle comprend au moins de l'alcool polyvinylique et / ou au moins un copolymère d'alcool polyvinylique, ainsi qu'un agent de réticulation, la composition aqueuse présentant au maximum 40 % en poids d'alcool polyvinylique et / ou de copolymère d'alcool polyvinylique et une teneur totale en matières solides d'au moins 26 % en poids et d'au plus 55 % en poids ;
c) sécher la couche et réticuler l'alcool polyvinylique et / ou le copolymère d'alcool polyvinylique à l'aide de l'agent de réticulation, en formant une couche de blocage (22a, 22b) pour des composés hydrophobes,
le substrat (12) étant enduit, avant l'étape a) et / ou après l'étape c) avec au moins une autre composition aqueuse,
- l'autre composition aqueuse comprenant au moins de l'alcool polyvinylique et / ou un copolymère d'alcool polyvinylique et étant exempte d'agents de réticulation et / ou
- au moins deux couches de blocage (22a, 22b) étant élaborées, les au moins deux couches de blocage (22a, 22b) comprenant des alcools polyvinyliques et / ou des copolymères d'alcool polyvinylique avec différents degrés de réticulation et / ou des alcools polyvinyliques et / ou des copolymères d'alcool polyvinylique avec différents degrés d'hydrolyse et / ou des alcools polyvinyliques et / ou des copolymères d'alcool polyvinylique, réticulés avec différents agents de réticulation.

2. Procédé selon la revendication 1,
**caractérisé en ce**
**qu'**une composition aqueuse est utilisée :
- avec une teneur en alcool polyvinylique et / ou copolymère d'alcool polyvinylique entre 2 % en poids et 35 % en poids, en particulier entre 10 % en poids et 32 % en poids et de préférence entre 26 % en poids et 30 % en poids et / ou
- avec une teneur totale en matières solides entre 26 % en poids et 52 % en poids, en particulier entre 26 % en poids et 50 % en poids et de préférence entre 26 % en poids et 45 % en poids et / ou
- avec une teneur en eau d'au moins 45 % en poids, en particulier d'au moins 55 % en poids et de préférence avec une teneur en eau entre 65 % en poids et 70 % en poids.

3. Procédé selon l'une des revendications 1 ou 2,
**caractérisé en ce que**
de l'alcool polyvinylique et / ou un copolymère d'alcool polyvinylique est utilisé avec :
- un degré d'hydrolyse entre 75 % et 100 %, en particulier entre 80 % et 99,9 % et / ou
- un degré de polymérisation entre 100 et 3 000, en particulier entre 120 et 1 200 et de préférence entre 150 et 650 et / ou
- avec un poids moléculaire moyen entre 11 000 g/mol et 60 000 g/mol, en particulier entre 13 000 g/mol et 23 000 g/mol et / ou entre 31 000 g/mol et 50 000 g/mol.

4. Procédé selon l'une des revendications 1 ou 3,
**caractérisé en ce**
**qu'**une composition aqueuse est utilisée, laquelle comprend au moins un autre polymère et / ou copolymère comme additif.

5. Procédé selon la revendication 4,
**caractérisé en ce que**
le au moins un autre polymère et / ou copolymère est dispersé dans la composition aqueuse et / ou que le au moins un autre polymère et / ou copolymère est sélectionné dans un groupe, qui comprend les poly(méth)acrylates, les polyméthyl(méth)acrylates, les polyamides, les biopolymères, en particulier le chitosane, les polyuréthanes, les acrylates de polyvinyle, les polyesters, en particulier des polyesters d'acides(méth)acryliques, des polyesters de vinyle, des polyesters d'acide lactique, des polyhydroxy-alcanoates, du polyhydroxybutyrate et / ou du polyacide hydroxybutyrique et / ou des copolymères de ceux-ci.

6. Procédé selon l'une des revendications 1 à 5,
**caractérisé en ce**
- **qu'**au moins un composé, saturé et / ou non saturé oléfiniquement, avec au moins un groupe fonctionnel, sélectionné parmi de l'aldéhyde, de l'acide carboxylique, de l'anhydride d'acide et un groupe d'amines et / ou
- du chlorure ferrique et / ou
- un orthosilicate d'alkyle, en particulier un tétraéthylorthosilicate et / ou
- une résine urée-formaldéhyde et / ou
- un réticulateur physique, en particulier de la carboxyméthylcellulose,
est utilisé(e) comme agent de réticulation.

7. Procédé selon l'une des revendications 1 à 6,
**caractérisé en ce**
**qu'**une composition aqueuse est utilisée, laquelle comprend, par rapport à 100 parties en poids d'alcool polyvinylique et / ou de copolymère d'alcool polyvinylique, entre 0,01 et 55 parties en poids d'agents de réticulation et / ou entre 1 et 60 parties en poids d'un matériau de remplissage et / ou d'un pigment.

8. Procédé selon la revendication 7,
**caractérisé en ce**
**qu'**un matériau de remplissage et / ou un pigment est utilisé, lequel résiste aux acides et / ou présente au moins essentiellement des géométries de particules sphériques et / ou en forme de plaquettes.

9. Procédé selon l'une des revendications 1 à 8,
**caractérisé en ce**
**qu'**une composition aqueuse est utilisée qui présente une viscosité entre 150 mPas et 2 500 mPas, en particulier entre 200 mPas et 1 700 mPas.

10. Procédé selon l'une des revendications 1 à 9,
**caractérisé en ce que**
la composition aqueuse est appliquée sur le substrat (12), de telle sorte qu'il résulte une masse sèche surfacique entre 1 g/m² et 20 g/m², en particulier entre 3 g/m² et 15 g/m² et / ou que la composition aqueuse est appliquée sur le substrat (12), de telle sorte que la couche présente une épaisseur du film humide entre 1 µm et 1 000 µm, en particulier entre 10 µm et 200 µm.

11. Procédé selon l'une des revendications 1 à 10,
**caractérisé en ce que**
la composition aqueuse est appliquée au moyen d'un procédé à la racle égalisateur, en particulier au moyen d'un racloir, d'un grattoir et / ou d'une presse à film et / ou au moyen d'un procédé de revêtement de profilé, en particulier par coulage, pulvérisation, couchage au rideau et / ou lame d'air sur le substrat (12).

12. Procédé selon l'une des revendications 1 à 11,
**caractérisé en ce que**
la composition aqueuse est appliquée sur le substrat (12) avec une température entre 30° C et 85° C, en particulier entre 35° C et 80° C.

13. Procédé selon l'une des revendications 1 à 12,
**caractérisé en ce que**
le substrat revêtu (12) est séché, au cours de l'étape c), par rayonnement infrarouge et / ou par convection et / ou rayonnement UV et / ou que le substrat revêtu (12) est séché jusqu'à une humidité résiduelle entre 3 % en poids et 12 % en poids, en particulier entre 6 % en poids et 10 % en poids.

14. Procédé selon l'une des revendications 1 à 13,
**caractérisé en ce**
**qu'**au cours de l'étape a), un substrat (12) est mis à disposition, lequel comprend un matériau de base (14), dont la face extérieure (16) est munie d'une couche de conditionnement et / ou d'une couche de couverture.

15. Matériau d'emballage (10), lequel est obtenu par un procédé selon l'une des revendications 1 à 14, comprenant :
- un substrat (12), lequel présente un matériau de base (14) en cellulose, une face extérieure (16), à détourner d'un produit à emballer, ainsi qu'une face intérieure (18), à tourner vers le produit à emballer, le matériau de base (14) étant du papier couché ou non couché, du carton couché ou non couché ou du carton épais couché ou non couché et
- un système de couches (20), agencé sur la face intérieure (18) du substrat (12), avec au moins une couche de blocage (22a, 22b) pour des composés hydrophobes, au moins une couche de blocage (22a, 22b) comprenant de l'alcool polyvinylique réticulé transversalement et / ou un copolymère d'alcool polyvinylique réticulé transversalement et le système de couches (20) comprenant en plus :
- au moins une couche (24), laquelle contient de l'alcool polyvinylique non réticulé et / ou un copolymère d'alcool polyvinylique non réticulé et / ou
- au moins deux couches de blocage (22a, 22b) en alcool polyvinylique, réticulé transversalement et / ou en en copolymère d'alcool polyvinylique réticulé transversalement, les couches de blocage (22a, 22b) comprenant des alcools polyvinyliques et / ou des copolymères d'alcool polyvinylique avec différents degrés de réticulation et / ou des alcools polyvinyliques et / ou des copolymères d'alcool polyvinylique avec différents degrés d'hydrolyse et / ou des alcools polyvinyliques et / ou des copolymères d'alcool polyvinylique, réticulés avec différents agents de réticulation.

16. Matériau d'emballage (10) selon la revendication 15,
**caractérisé en ce que**
le système de couches (20) comprend au moins deux couches de blocage (22a, 22b) en alcool polyvinylique, réticulé transversalement et / en copolymère d'alcool polyvinylique réticulé transversalement, au moins une couche de blocage (22a, 22b) comprenant au moins un matériau de remplissage et / ou au moins un pigment.

17. Matériau d'emballage (10) selon la revendication 15 ou 16,
**caractérisé en ce que**
le système de couches (20) comprend au moins une couche (24), laquelle contient un alcool polyvinylique non réticulé et / ou un copolymère d'alcool polyvinylique non réticulé, la couche (24), contenant l'alcool polyvinylique non réticulé et / ou le copolymère d'alcool polyvinylique non réticulé étant agencée directement sur la face intérieure (18) du substrat (12) et / ou entre deux couches de blocage (22a, 22b) et / ou sur une face, détournée du matériau de base (14), d'une couche de blocage (22a, 22b).
